# EUROPEAN PATENT APPLICATION

(11) **EP 3 936 334 A1**
(43) Date of publication of application: **12.01.2022**
(21) Application number: 20765994.7
(22) Date of filing: 03.03.2020
(51) Int. Cl.: B32B 27/00, B32B 27/28, B65D 77/20, B32B 1/02, B65D 81/24

(54) **PACKAGING CONTAINER, AND STEAM-STERILIZED PRODUCT IN WHICH SAME IS USED**

(30) Priority: 04.03.2019 JP 2019038957
(71) Applicant: Kuraray Co., Ltd., Kurashiki-shi, Okayama 710-0801 (JP); Hisaka Works, Ltd., Osaka-shi, Osaka 530-0057 (JP)
(72) Inventor: NONAKA, Yasuhiro, Kurasiki-shi, Okayama 713-8550 (JP); HOSHIKA, Rina, Kurasiki-shi, Okayama 713-8550 (JP); OSHITA, Tatsuya, Kurasiki-shi, Okayama 713-8550 (JP); TSUTSUMI, Ryuichi, Osaka-shi, Osaka 578-0973 (JP); UKAI, Kota, Osaka-shi, Osaka 578-0973 (JP); MIFUNE, Kazunori, Osaka-shi, Osaka 578-0973 (JP)
(74) Representative: Müller-Boré & Partner Patentanwälte PartG mbB
(86) International application number: PCT/JP2020/008842
(87) International publication number: WO 2020/179771

(57) **Abstract**

A packaging container of the present invention includes a container body (A) that includes an opening portion and an inner surface on which a content can be placed, and a lid member (B) for covering the opening portion of the container body (A). In the packaging container of the present invention, the container body (A) includes, on the inner surface, a steam flowing channel that enables steam to flow between the content and the inner surface, and is constituted by a multilayer structure (A') that includes at least one oxygen barrier layer (a). The lid member (B) includes a layered structure (b-1) provided with at least two perforations, and a layered structure (b-2) that is arranged on an outer surface of the layered structure (b-1) and blocks the perforations. At least one of the layered structure (b-1) and the layered structure (b-2) includes an oxygen barrier layer (b).

## Description

### Technical Field

The present invention relates to a packaging container, and a steam-sterilized product in which the same is used, and more specifically to a packaging container that can be used to package food such as a prepared meal, and a steam-sterilized product in which the same is used.

### Background Art

Food called a "daily-delivered prepared meal" or "daily-delivered food (also collectively referred to merely as "daily-delivered food" hereinafter) is food that is cooked or processed in a food factory or the like and is distributed in a state in which it is contained in a molded container and a top sheet or covering lid is arranged on the container.

In particular, a technique is proposed in which a packaging container containing food is placed in a sterilizer, high-temperature and high-pressure steam is introduced into the container body after vacuuming of the sterilizer to sterilize the food with the high-temperature and high-pressure steam, the food is cooled after the pressure inside the sterilizer is reduced, the packaging container taken out of the sterilizer is filled with soup or water, the opening portion of the container is sealed with a lid, and then the container is subjected to retort sterilization (Patent Document 1). With such a technique, the food contained in the packaging container can be sterilized as it is without transferring the food to a retainer, and can be distributed as it is by merely covering the opening portion of the packaging container with a lid after the sterilization.

### Related Art Documents

### Patent Document

Patent Document 1: JP H9-009937A

### Summary of the Invention

### Problem to be Solved by the Invention

However, some problems of such sterilization of food with high-temperature and high-pressure steam are pointed out.

In one example of such problems, food contained in a packaging container may be nonuniformly sterilized, resulting in deterioration of the taste and difficulty in substantially extending the expiration date.

The reason for this is that steam introduced into the packaging container does not uniformly distribute around the food contained therein, and thus the food is nonuniformly sterilized. For example, when the food is a prepared meal, it may be hard to say that the external shape thereof is always constant. In this respect, it is desired to develop a packaging container with which more uniform sterilization can be performed irrespective of differences in the type or external shape of food.

In another example of the above-mentioned problems, it is hard to say that the material constituting a packaging container itself is not suitable enough for the applications as mentioned above.

For example, it is pointed out that the material constituting the packaging container does not have an ability to suitably block the outside air from entering the container, and thus a steam sterilization effect cannot be sufficiently maintained. In these respects, it is desired to develop a packaging container made of a material that is suitable for the sterilization with high-temperature and high-pressure steam.

The present invention was made in order to solve the aforementioned problems, and it is an object thereof to provide a packaging container with which uniform sterilization can be performed using high-temperature and high-pressure steam and a content can be maintained in a sterilized state for a long period of time, and a steam-sterilized product in which the same is used.

### Means for Solving the Problem

That is, the present invention is achieved by providing:
[1] a packaging container comprising:
   a container body (A) that includes an opening portion and an inner surface on which a content can be placed; and
   a lid member (B) for covering the opening portion of the container body (A),
   wherein the container body (A) includes, on the inner surface, a steam flowing channel that enables steam to flow between the content and the inner surface, and is constituted by a multilayer structure (A') that includes at least one oxygen barrier layer (a),
   the lid member (B) includes a layered structure (b-1) provided with at least two perforations, and a layered structure (b-2) that is arranged on an outer surface of the layered structure (b-1) and blocks the perforations, and
   at least one of the layered structure (b-1) and the layered structure (b-2) includes an oxygen barrier layer (b);
[2] the packaging container according to [1], wherein the oxygen barrier layer (b) in the lid member (B) contains at least one selected from the group consisting of an ethylene-vinyl alcohol copolymer, a composite structure containing phosphorus and a polyvalent metal element, modified starch, polyamide, polyester, polyvinylidene chloride, an acrylonitrile copolymer, polyvinylidene fluoride, polychlorotrifluoroethylene, polyvinyl alcohol, an inorganic layered compound, an inorganic deposited layer, and a metal foil;
[3] the packaging container according to [1] or [2], wherein a water contact angle on a surface that constitutes an inner side of the lid member (B) is 70° or less when measured in accordance with JIS R3257;
[4] the packaging container according to any one of [1] to [3], wherein the perforations of the layered structure (b-1) of the lid member (B) have a diameter of 1 mm or more and 20 mm or less;
[5] the packaging container according to any one of [1] to [4], wherein the lid member (B) includes a sticky layer between the layered structure (b-1) and the layered structure (b-2);
[6] the packaging container according to any one of [1] to [5], wherein the oxygen barrier layer (a) in the container body (A) contains at least one selected from the group consisting of an ethylene-vinyl alcohol copolymer, a composite structure containing phosphorus and a polyvalent metal element, modified starch, polyamide, polyester, polyvinylidene chloride, an acrylonitrile copolymer, polyvinylidene fluoride, polychlorotrifluoroethylene, polyvinyl alcohol, an inorganic layered compound, an inorganic deposited layer, and a metal foil;
[7] a container body (A) to be used in the packaging container according to any one of [1] to [6], comprising
   an opening portion; and an inner surface on which a content can be placed,
   wherein the container body (A) includes, on the inner surface, a steam flowing channel that enables steam to flow between the content and the inner surface, and is constituted by a multilayer structure (A') that includes at least one oxygen barrier layer (a),
   the inner surface includes a container bottom portion (a1), and a container side wall portion (a2) that extends upward from a periphery of the container bottom portion (a1), and
   the steam flowing channel and the opening portion are in communication with each other;
[8] a multilayer structure (A') to be used in the packaging container according to any one of [1] to [6], wherein an oxygen barrier layer (a) contains at least one selected from the group consisting of an ethylene-vinyl alcohol copolymer, polyamide, and modified starch;
[9] a layered structure (B') to be used in the layered structure (b-1) included in the packaging container according to any one of [1] to [6], the layered structure (B') comprising
   at least one oxygen barrier layer (b),
   wherein the layered structure (B') includes a sealant layer having a melting point of 180°C or lower on at least one outermost layer thereof;
[10] the layered structure (B') according to [9], having oxygen barrier properties of 10 cc/(m² ·day ·atm) or less at 20°C and 65%RH;
[11]. the layered structure (B') according to [9] or [10], having a puncture strength of 10 N to 40 N;
[12] the layered structure (B') according to any one of [9] to [11], wherein the oxygen barrier layer (b) contains at least one selected from the group consisting of an ethylene-vinyl alcohol copolymer, a composite structure containing phosphorus and a polyvalent metal element, modified starch, polyamide, polyester, polyvinylidene chloride, an acrylonitrile copolymer, polyvinylidene fluoride, polychlorotrifluoroethylene, polyvinyl alcohol, an inorganic layered compound, an inorganic deposited layer, and a metal foil;
[13] a layered structure (b-1) obtained by providing at least two perforations in the layered structure (B') according to any one of [9] to [12];
[14] the layered structure (b-1) according to [13], wherein the oxygen barrier layer (b) contains at least one selected from the group consisting of an ethylene-vinyl alcohol copolymer, a composite structure containing phosphorus and a polyvalent metal element, modified starch, polyamide, polyester, polyvinylidene chloride, an acrylonitrile copolymer, polyvinylidene fluoride, polychlorotrifluoroethylene, polyvinyl alcohol, an inorganic layered compound, an inorganic deposited layer, and a metal foil;
[15] a steam-sterilized product comprising:
   the packaging container according to any one of [1] to [6]; and
   a steam-sterilized content,
   wherein the content is placed on the inner surface of the container body (A) included in the packaging container, and
   the container body (A) and the lid member (B) included in the packaging container are hermetically sealed;
[16] the steam-sterilized product according to [15], wherein an oxygen concentration in a region surrounded by the container body (A) and the lid member (B) is 5 vol% or less;
[17] the steam-sterilized product according to [15] or [16], wherein a carbon dioxide concentration in a region surrounded by the container body (A) and the lid member (B) is 0.5 vol% or more and 40 vol% or less;
[18] the steam-sterilized product according to any one of [15] to [17], wherein the steam-sterilized content is food;
[19] the packaging container according to any one of [1] to [6], wherein the content is food, and the packaging container is used to sterilize the content with steam.

### Effects of the Invention

With the present invention, a contained content can be more uniformly sterilized, and the content can be maintained in a sterilized state for a long period of time. This makes it possible to further delay the degeneration or decay of the content, and thus reassure consumers about the quality of the content.

### Brief Description of Drawings

FIG. 1 shows schematic diagrams for illustrating an example of a packaging container of the present invention. FIG. 1(a) is a side view of the packaging container, and FIG. 1(b) is a top view of the packaging container.
FIG. 2 shows cross-sectional views of the packaging container shown in FIG. 1. FIG. 2(a) is a cross-sectional view of the packaging container taken along a longitudinal direction, and FIG. 2(b) is a partially enlarged cross-sectional view of the packaging container taken along the longitudinal direction.
FIG. 3 shows cross-sectional views for illustrating another example of the packaging container of the present invention, taken along the longitudinal direction.
FIG. 4 shows top views of a container body (A) included in the packaging container of the present invention. FIG. 4(a) is a top view of the container body (A) shown in FIG. 2, FIG. 4(b) is a top view of the container body (A) for illustrating another example of the container body (A) that can be included in the packaging container of the present invention, and FIG. 4(c) is a top view of the container body (A) for illustrating yet another example of the container body (A) that can be included in the packaging container of the present invention.
FIG. 5 shows schematic diagrams for illustrating an example of a method for manufacturing a steam-sterilized product of the present invention.

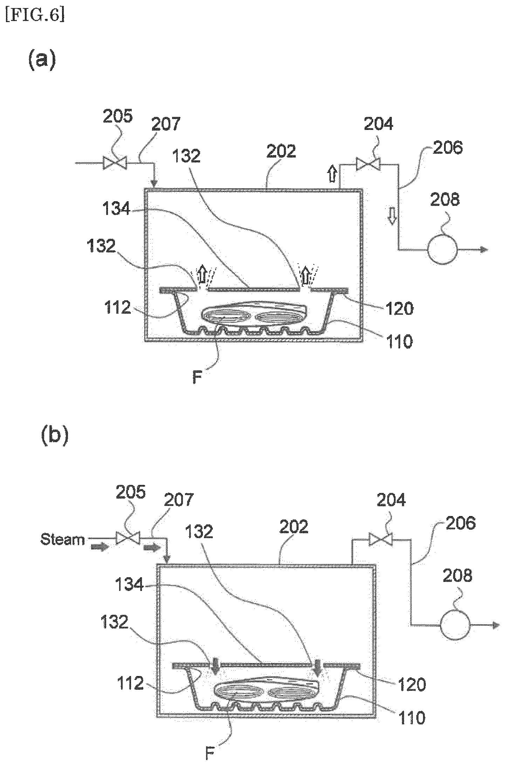

FIG. 6 shows schematic diagrams for illustrating a procedure for exposing a content F contained in the container body (A) to a reduced-pressure environment and then sterilizing the content F, which can be employed in the method of manufacturing a steam-sterilized product of the present invention. FIG. 6(a) is a diagram showing a state in which air is evacuated from the container body (A) through perforations 132 in a layered structure (b-1) under a reduced-pressure environment, and FIG. 6(b) is a diagram showing a state in which steam is introduced into the container body (A) through the perforations 132 in the layered structure (b-1) after the reduced-pressure state is cancelled.
FIG. 7 shows schematic diagrams for illustrating another example of the method for manufacturing a steam-sterilized product of the present invention.

### Description of Embodiments

Hereinafter, the present invention will be described in detail.

### Packaging Container

First, the appearance features of a packaging container of the present invention will be described with reference to the drawings.

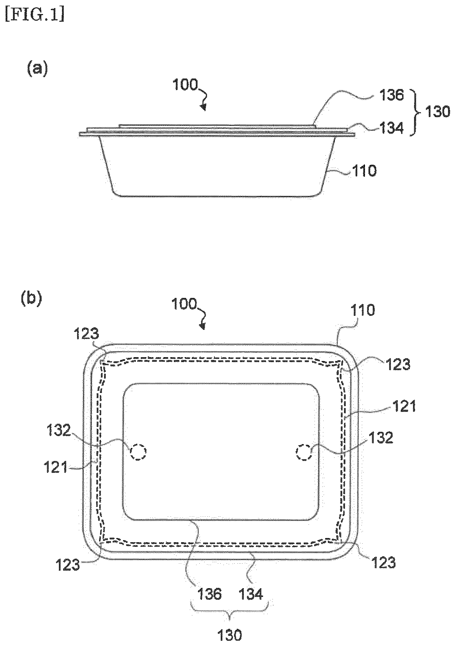

As shown in FIG. 1(a), a packaging container 100 of the present invention includes a container body (A) 110 and a lid member (B) 130. The lid member (B) 130 is arranged on the container body (A) 110 so as to cover an opening portion (not shown), and then the lid member (B) and the outer periphery of the opening portion are tightly sealed. With this configuration, ventilation is blocked at a portion where the lid member (B) 130 and the container body (A) 110 are tightly sealed.

As shown in FIG. 1(b), the lid member (B) 130 includes a layered structure (b-1) 134 provided with at least two perforations 132, and a layered structure (b-2) 136 is arranged so as to close the perforations 132.

### Container Body (A)

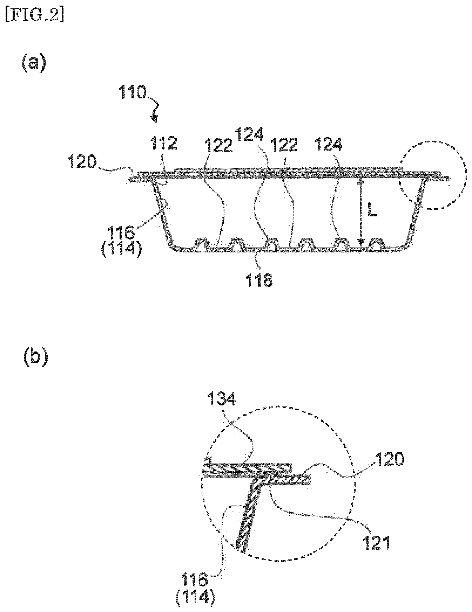

FIG. 2 shows cross-sectional views of the container body (A) 110 included in the packaging container shown in FIG. 1.

As shown in FIG. 2(a), the container body (A) 110 includes an inner surface 114 on which a desired content can be placed through an opening portion 112 that is open upward. The inner surface 114 includes a container bottom portion (a1) 118, and a container side wall portion (a2) 116 that extends upward from the periphery of the container bottom portion (a1) 118. It should be noted that, in FIG. 2(a), the container side wall portion (a2) 116 included in the inner surface 114 of the container body (A) 110 is inclined from the opening portion 112 to the container bottom portion (a1) 118, but the present invention is not necessarily limited to such a shape.

The container body (A) 110 may be provided with a flange portion 120 extending along the periphery of the opening portion 112. A portion of the flange portion 120 and the peripheral edge portion of the lid member (B) 130 can be tightly sealed as shown in FIG 1(a) using a known means such as heat sealing or an adhesive. Moreover, as shown in FIG. 2(b), the flange portion 120 may be provided with a bulging portion 121 that bulges in the opening direction and, for example, continuously extends along the flange portion 120. It should be noted that, as shown in FIG. 1(b), the bulging portion 121 may include a pointed end portion 123 formed by the ridge of the bulging portion 121 that is sharply bent at at least one of the four corners of the container body (A) 110, for example. Stress is concentrated in such a pointed end portion 123, thus making it possible to separate the lid member (B) 130 and the container body (A) 110 in the tightly sealed state by less force.

FIG. 2(a) is referred to again. In the present invention, the container body (A) 110 includes a steam flowing portion 122 on the inner surface 114. The steam flowing portion 122 is in communication with the opening portion 112 of the container body (A) 110. Since the container body (A) 110 includes the steam flowing portion 122, steam can flow between a content (not shown) and the inner surface 114. For example, a plurality of steam flowing portions 122 are provided on the container bottom portion (a1) 118 of the container body (A) 110. Specifically, the container bottom portion (a1) 118 of the container body (A) 110 shown in FIG. 2(a) is provided with a plurality of protruding portions 124 that are arranged at substantially regular intervals or at irregular intervals, and each of the steam flowing portions 122 is formed between one protruding portion 124 and another protruding portion 124 that is adjacent thereto. The protruding portion 124 is designed such that a content contained in the container body (A) 110 is supported in a point contact manner or line contact manner, for example, and the contact area between the protruding portion 124 and the content is as small as possible.

In an embodiment shown in FIG. 2(a), the steam flowing portions 122 are arranged at substantially regular intervals on the container bottom portion (a1) 118 of the container body (A) 110. With the container body (A) 110 having such a configuration, when a content (e.g., food) contained in the container body (A) 110 is sterilized with steam, a larger amount of steam can flow to not only the top face and the side faces but also the bottom face of the content through the steam flowing channels 122 formed on the container bottom portion (a1) 118. This makes it possible to more uniformly and efficiently sterilize the content with steam.

In the embodiment shown in FIG. 2(a), there is no particular limitation on the height of the protruding portions 124, and the height thereof from the inner lowermost face of the container bottom portion (a1) 118 (i.e., a lowermost position of the inner surface 114 of the container body (A) 110) is 2 mm or more, 3 mm or more, or 4 mm or more, for example. Moreover, there is no particular limitation on the height of the protruding portions 124, and the height thereof from the inner lowermost face of the container bottom portion (a1) 118 is 15 mm or less, 13 mm or less, or 10 mm or less, for example. Since the height of the protruding portions 124 is within such a range, steam is more likely to flow into the steam flowing channels 122, thus making it possible to more effectively sterilize the bottom face side of the content with steam.

The height of the protruding portions 124 is preferably 10% or more and 40% or less of a depth L of the container body (A) 110 (i.e., a distance from the opening portion 112 of the container body (A) 110 to the lowermost portion of the inner surface 114 in the vertical direction). With this configuration, the cross-sectional area of each steam flowing channel 122 (i.e., this corresponds to the area of a figure formed by a straight line connecting the vertex of one protruding portion 124 and the vertex of another protruding portion 124 in FIG.2 (a) that is adjacent thereto, and the edge line between these two protruding portions 124) increases, and therefore, steam is more likely to flow into the steam flowing channels 122, thus making it possible to more effectively sterilize the bottom face side of the content with steam.

In the above-described example of the packaging container of the present invention shown in FIG. 2(a), the substantially flat lid member (B) that includes the layered structure (b-1) 134 and the layered structure (b-2) 136 and the container body (A) 110 (specifically the flange portion 120) are tightly sealed, but the combination of the container body (A) and the lid member (B) in the present invention is not limited to such an aspect.

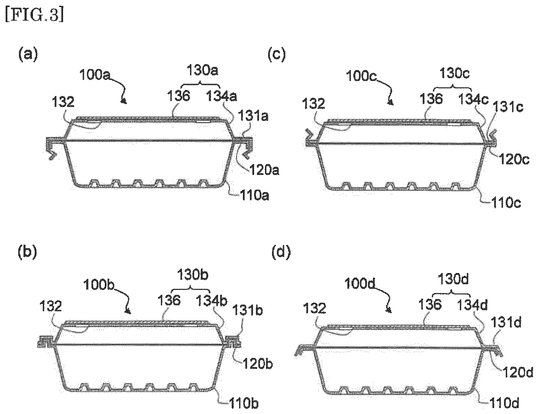

For example, the packaging container of the present invention may include a container body (A) and a lid member (B) as shown in FIGS. 3(a) to 3(d).

A packaging container 100a shown in FIG. 3(a) includes a container body (A) 110a having a flange portion 120a, and a lid member 130a that includes a layered structure (b-1) 134a having a lid-side flange portion 131a and a layered structure (b-2) 136. As shown in FIG. 3(a), the packaging container 100a has a configuration in which the flange portion 120a of the container body (A) 110a is covered by the lid-side flange portion 131a of the lid member 130a and is fitted thereinto (exterior fitting type). The portion where the lid-side flange portion 131a and the flange portion 120a are in contact with each other is tightly sealed using a well-known means such as heat sealing or an adhesive.

A packaging container 100b shown in FIG. 3(b) includes a container body (A) 110b, and a lid member 130b that includes a layered structure (b-1) 134b and a layered structure (b-2) 136. The container body (A) 110b includes a flange portion 120b provided with a protrusion that protrudes upward, and the layered structure (b-1) 134b includes a lid-side flange portion 131b provided with a recessed portion. As shown in FIG. 3(b), the packaging container 100b has a configuration in which the protrusion of the flange portion 120b of the container body (A) 110b is accommodated in the recessed portion of the lid-side flange portion 131b of the lid member 130b and is fitted thereinto (interior and exterior fitting type). The portion where the lid-side flange portion 131b and the flange portion 120b are in contact with each other is tightly sealed using a well-known means such as heat sealing or an adhesive.

A packaging container 100c shown in FIG. 3(c) includes a container body (A) 110c having a flange portion 120c, and a lid member 130c that includes a layered structure (b-1) 134c having a lid-side flange portion 131c and a layered structure (b-2) 136. As shown in FIG. 3(c), the packaging container 100c has a configuration in which the lid-side flange portion 131c of the lid member 130c is covered by the flange portion 120c of the container body (A) 110c and is fitted thereinto (interior fitting type). The portion where the lid-side flange portion 131c and the flange portion 120c are in contact with each other is tightly sealed using a well-known means such as heat sealing or an adhesive.

A packaging container 100d shown in FIG. 3(d) includes a container body (A) 110d having a flange portion 120d, and a lid member 130d that includes a layered structure (b-1) 134d having a lid-side flange portion 131d and a layered structure (b-2) 136. As shown in FIG. 3(d), the packaging container 100d has a configuration in which the lid-side flange portion 131d of the lid member 130d covers the flange portion 120d of the container body (A) 110d (layered type). The portion where the lid-side flange portion 131d and the flange portion 120d are in contact with each other is tightly sealed using a well-known means such as heat sealing or an adhesive.

Specific examples of the container body (A) included in the packaging container of the present invention will be described more specifically.

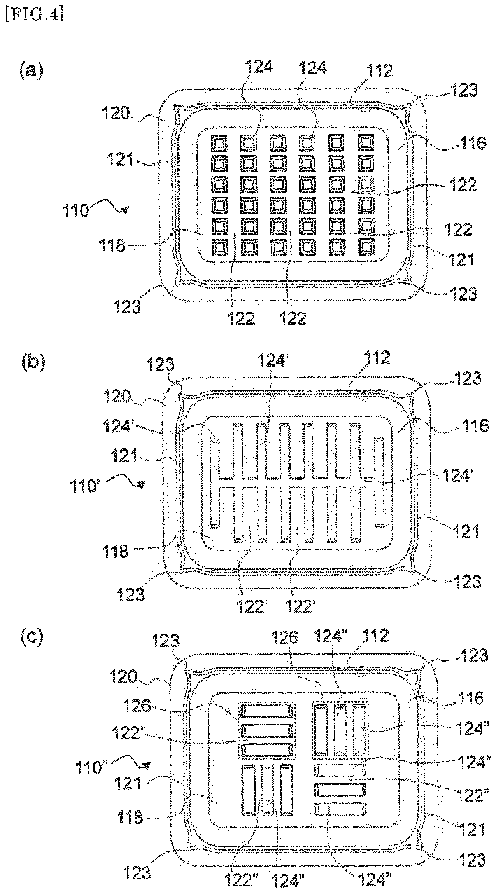

FIG. 4(a) is a top view of the container body (A) shown in FIG. 2(a).

In the container body (A) 110, the protruding portions 124 are substantially uniformly arranged on the container bottom portion (a1) 118, and a plurality of steam flowing channels 122 that extend linearly in the longitudinal direction and the lateral direction are provided between the protruding portions 124.

It should be noted that the configuration of the container body (A) 110 of the packaging container of the present invention is not limited to the above-mentioned configuration, and the container body (A) 110 may have a configuration as shown in FIG. 4(b) or 4(c).

For example, as shown in FIG. 4(b), a container body (A) 110' may be configured to include a protruding portion 124' formed by linking together a plurality of semicylindrical protrusions that are arranged extending in the same direction (the vertical direction in FIG. 4(b)) on the container bottom portion (a1) 118 (it should be noted that constituent elements in FIG. 4(b) that are the same as those in FIG. 4(a) are denoted by the same reference numerals). In this case, a plurality of steam flowing channels 122' that extend in the same direction (the vertical direction in FIG. 4(b)) are formed between the semicylindrical protrusions included in the protruding portion 124'.

Compared with the container body (A) 110 shown in FIG 4(a) in which the protruding portions 124 support a content in a point contact manner, the protruding portion 124' of the container body (A) 110' shown in FIG. 4(b) can support a content in a line contact manner. For example, even if a content is very soft food (e.g., a prepared meal such as simmered fish that is easy to lose shape), the bottom face side of the content can be sterilized with steam while the contact area between the content and the container body (A) 110' is made as small as possible.

Alternatively, as shown in FIG. 4(c), a container body (A) 110" may be configured such that a plurality of semicylindrical protruding portions 124" are provided on the container bottom portion (a1) 118, a set of several (three in FIG. 4(c)) protruding portions 124" forms a block 126 in which the protruding portions 124" are lined up substantially in parallel with one another, and the block 126 is arranged rotated at 90° relative to another block arranged extending in the vertical direction or lateral direction as shown in FIG. 4(c) (it should be noted that constituent elements in FIG. 4(c) that are the same as those in FIG. 4(a) are denoted by the same reference numerals). In this case, in one block 126, steam flowing channels 122" extending in the same direction are each formed between one protruding portion 124" and another protruding portion 124" that is adjacent thereto in the block 126.

Compared with the container body (A) 110 shown in FIG. 4(a) in which the protruding portions 124 support a content in a point contact manner, the protruding portions 124" of the container body (A) 110" shown in FIG. 4(c) can support a content in a line contact manner. Moreover, compared with the container body (A) 110' shown in FIG. 4(b), the steam flowing channels 122" extending in at least two directions (the vertical direction and the lateral direction in FIG. 4(c)) are provided. Accordingly, even if a content is very soft food, for example, the bottom face side of the content can be sterilized with steam flowing in a plurality of directions on the bottom portion 118 while the contact area between the content and the container body (A) 110" is made as small as possible. Even if the content blocks the steam flowing channels 122" extending in either the vertical direction or lateral direction, steam can flow in the other direction, thus making it possible to reliably sterilize the content with steam.

### Multilayer Structure (A')

FIG. 1(a) is referred to again. The container body (A) 110 of the packaging container 100 of the present invention is constituted by a multilayer structure (A') in which a plurality of layers are stacked.

In the present invention, the multilayer structure (A') includes an oxygen barrier layer (a).

The multilayer structure (A') may include a plurality of oxygen barrier layers (a) from the viewpoint of further improving oxygen barrier properties, and materials constituting the layers may be the same or different.

The oxygen barrier layer (a) is a layer having a function of preventing gas permeation, and, for example, has an oxygen permeability of 100 cc·20 µm/(m²·day·atm) or less, preferably 50 cc·20 µm/(m²·day·atm) or less, and more preferably 10 cc-20 µm/(m²·day·atm) or less when the oxygen permeability is measured under the conditions of 20°C and 65%RH in accordance with JIS-K7126-2 (2006) Part 2 (isopiestic method). Here, the oxygen permeability of "10 cc-20 µm/(m²·day·atm)" means that an amount of oxygen passing through a 20-µm barrier material (constituting a single oxygen barrier layer (a)) per day in an oxygen atmosphere of 1 atmospheric pressure of oxygen is 10 cc.

The oxygen barrier layer (a) includes a gas barrier material such as an ethylene-vinyl alcohol copolymer (also referred to as "EVOH" hereinafter), a composite structure containing phosphorus and a polyvalent metal element, modified starch, polyamide, polyester, polyvinylidene chloride, an acrylonitrile copolymer, polyvinylidene fluoride, polychlorotrifluoroethylene, polyvinyl alcohol, an inorganic layered compound, an inorganic deposited layer, or a metal foil. In particular, it is preferable that the oxygen barrier layer (a) contains EVOH, polyamide, modified starch, or a combination thereof because these compounds have favorable oxygen barrier properties and favorable molten moldability, and it is more preferable that the oxygen barrier layer (a) contains EVOH because EVOH has particularly excellent molten moldability.

### EVOH

EVOH can be obtained through saponification of an ethylene-vinyl ester copolymer, for example. An ethylene-vinyl ester copolymer can be manufactured and saponified using a known method. Examples of vinyl ester that can be used in this method include fatty acid vinyl esters such as vinyl acetate, vinyl formate, vinyl propionate, vinyl pivalate, and vinyl versatate.

In the present invention, the ethylene unit content in EVOH is preferably 20 mol% or more, 22 mol% or more, or 24 mol% or more, for example. Moreover, the ethylene unit content in EVOH is preferably 60 mol% or less, 55 mol% or less, or 50 mol% or less, for example. If the ethylene unit content is 20 mol% or less, the molten moldability and the oxygen barrier properties at high temperatures are likely to improve. If the ethylene unit content is 60 mol% or less, the oxygen barrier properties are likely to improve. Such an ethylene unit content in EVOH can be measured using a nuclear magnetic resonance (NMR) technique, for example.

In the present invention, the lower limit of the saponification degree of the vinyl ester component in EVOH is preferably 80 mol% or more, 90 mol% or more, or 99 mol% or more, for example. If the saponification degree is 80 mol% or more, the oxygen barrier properties of the oxygen barrier layer (a) can be improved, for example. On the other hand, the upper limit of the saponification degree of the vinyl ester component in EVOH may be 100% or less, or 99.99% or less, for example. The saponification degree of EVOH can be calculated by measuring the peak area of hydrogen atoms contained in the vinyl ester structure and the peak area of hydrogen atoms contained in the vinyl alcohol structure through ¹H-NMR measurement. Since the saponification degree of EVOH is within the above-mentioned range, favorable oxygen barrier properties can be provided to the oxygen barrier layer (a) included in the container body (A).

EVOH may also include a unit derived another monomer other than ethylene, vinyl ester, and saponified products thereof as long as the object of the present invention is not inhibited. When EVOH includes another monomer unit as mentioned above, the upper limit of the other monomer unit content in all of the structural units of EVOH is 30 mol% or less, 20 mol% or less, 10 mol% or less, or 5 mol% or less, for example. Furthermore, when EVOH includes the unit derived from the other monomer, the lower limit of the content thereof is 0.05 mol% or more or 0.1 mol% or more, for example.

Examples of such another monomer that may be included in EVOH include alkenes such as propylene, butylene, pentene, and hexene; ester group-containing alkenes such as 3-acyloxy-1-propene, 3-acyloxy-1-butene, 4-acyloxy-1-butene, 3,4-diacyloxy-1-butene, 3-acyloxy-4-methyl-1-butene, 4-acyloxy-1-butene, 3,4-diacyloxy-1-butene, 3-acyloxy-4-methyl-1-butene, 4-acyloxy-2-methyl-1-butene, 4-acyloxy-3-methyl-1-butene, 3,4-diacyloxy-2-methyl-1-butene, 4-acyloxy-1-pentene, 5-acyloxy-1-pentene, 4,5-diacyloxy1-pentene, 4-acyloxy-1-hexene, 5-acyloxy-1-hexene, 6-acyloxy-1-hexene, 5,6-diacyloxy-1-hexene, and 1,3-diacetoxy-2-methylenepropane, or saponified products thereof; unsaturated acids such as acrylic acid, methacrylic acid, crotonic acid, and itaconic acid, or anhydrides, salts, monoalkyl esters, or dialkyl esters thereof; nitriles such as acrylonitrile and methacrylonitrile; amides such as acrylamide and methacrylamide; olefin sulfonic acid such as vinyl sulfonic acid, allyl sulfonic acid, and methallyl sufonic acid, or salts thereof; vinylsilane compounds such as vinyltrimethoxysilane, vinyltriethoxysilane, vinyltri(β-methoxy-ethoxy)silane, and γ-methacryloxypropylmethoxysilane; alkyl vinyl ethers, vinyl ketones, N-vinylpyrrolidone, vinyl chloride, and vinylidene chloride.

EVOH may be modified through techniques such as urethanation, acetalation, cyanoethylation, and oxyalkylenation. The thus-modified EVOH is likely to improve the molten moldability of the oxygen barrier layer (a).

A combination of two or more types of EVOH that differs in the ethylene unit content, the saponification degree, the copolymer component, whether or not they are modified, the modification type, or the like may be used as EVOH.

EVOH can be obtained using a known technique such as bulk polymerization, solution polymerization, suspension polymerization, or emulsion polymerization. In one embodiment, bulk polymerization or solution polymerization in which polymerization can be performed using no solvent or in a solution such as alcohol is used.

There is no particular limitation on a solvent used in solution polymerization, and examples thereof include alcohols, preferably lower alcohols such as methanol, ethanol, and propanol. It is sufficient that the amount of a solvent used in a polymerization reaction solution is selected in consideration of the viscosity-average polymerization degree of target EVOH or the chain transfer of the solvent, and the ratio (solvent / total monomers) between the mass of the solvent contained in the reaction solution and the total mass of monomers contained therein is 0.01 to 10, for example, and preferably 0.05 to 3.

Examples of a catalyst used in the above-mentioned polymerization include azo-based initiators such as 2,2-azobisisobutyronitrile, 2,2-azobis-(2,4-dime thylvaleronitrile), 2,2-azobis-(4-methoxy-2,4-dimethylvaleronitrile), and 2,2-azobis-(2-cyclopropylpropionitrile); and organic peroxide-based initiators such as isobutyryl peroxide, cumyl peroxyneodecanoate, diisopropyl peroxycarbonate, di-n-propyl perpoxydicarbonate, t-butyl peroxyneodecanoate, lauroyl peroxide, benzoyl peroxide, and t-butyl hydroperoxide.

The polymerization temperature is preferably 20°C to 90°C, and more preferably 40°C to 70°C. The polymerization time is preferably 2 hours to 15 hours, and more preferably 3 hours to 11 hours. The polymerization rate is preferably 10% to 90%, and more preferably 30% to 80%, in terms of vinyl ester prepared for the polymerization. The resin content in the solution after the polymerization is preferably 5% to 85%, and more preferably 20% to 70%.

In the above-mentioned polymerization, after polymerization is performed for a predetermined period of time or a predetermined polymerization rate is obtained, a polymerization inhibitor is added as needed, unreacted ethylene gas is removed through evaporation, and unreacted vinyl ester can be removed.

Then, an alkaline catalyst is added to the copolymer solution, and the copolymer is saponified. A continuous saponification method or batch saponification method may be employed. Examples of the alkaline catalyst that can be added include sodium hydroxide, potassium hydroxide, and alkali metal alcoholates.

EVOH that has been subjected to saponification reaction contains the alkaline catalyst, by-product salts such as sodium acetate and potassium acetate, and other impurities. Accordingly, it is preferable to remove these compounds as needed through neutralization or washing. Here, when EVOH that has been subjected to saponification reaction is washed with water (e.g., ion-exchanged water) that is substantially free of predetermined ions (e.g., metal ions and chloride ions), by-product salts such as sodium acetate and potassium acetate need not be entirely removed, and a portion thereof may remain.

EVOH may contain another thermoplastic resin, a metal salt, an acid, a boron compound, a plasticizer, a filler, an anti-blocking agent, a lubricant, a stabilizer, a surfactant, a coloring agent, an ultraviolet absorber, an antistatic agent, a drying agent, a cross-linking agent, a reinforcing material such as various fibers, and other components. It is preferable that EVOH contains a metal salt and an acid because the oxygen barrier layer (a) has favorable thermal stability and favorable adhesiveness to another resin.

The metal salt is preferably an alkali metal salt from the viewpoint of improving the interlayer adhesiveness, and is preferably an alkali earth metal salt from the viewpoint of improving the thermal stability. When EVOH contains a metal salt, the lower limit of the metal salt content in EVOH is 1 ppm or more, 5 ppm or more, 10 ppm or more, or 20 ppm or more, for example, in terms of the metal atom in the metal salt. Moreover, when EVOH contains a metal salt, the upper limit of the metal salt content in EVOH is 10000 ppm or less, 5000 ppm or less, 1000 ppm or less, or 500 ppm or less, for example, in terms of the metal atom in the metal salt. When the metal salt content is within the range from the lower limit to the upper limit mentioned above, it is likely that that the thermal stability of EVOH is favorably maintained when the container body (A) is recycled, while the interlayer adhesiveness of the oxygen barrier layer (a) is favorably maintained.

Examples of the acid include carboxylate compounds and phosphate compounds. These acids are useful because they can improve the thermal stability, so that EVOH is stable even when subjected to molten molding. When EVOH contains a carboxylate compound, the lower limit of the carboxylic acid content (i.e., the carboxylic acid content in a dry composition of the EVOH-containing oxygen barrier layer (a)) is 1 ppm or more, 10 ppm or more, or 50 ppm or more, for example. Moreover, the upper limit of the carboxylate compound content is 10000 ppm or less, 1000 ppm or less, or 500 ppm or less, for example. When EVOH contains a phosphate compound, the lower limit of the phosphoric acid content (i.e., the phosphate compound content in the oxygen barrier layer (a) that includes EVOH, in terms of phosphate radical) is 1 ppm or more, 10 ppm or more, or 30 ppm or more, for example. Moreover, the upper limit of the phosphate compound content is 10000 ppm or less, 1000 ppm or less, or 300 ppm or less, for example. When EVOH contains a carboxylate compound or phosphate compound in an amount within the above-mentioned range, it is likely that EVOH has favorable thermal stability and is thus stable even when subjected to molten molding.

When EVOH contains a boron compound, the lower limit of the boron compound content (i.e., the boron compound content in a dry composition of the oxygen barrier layer (a) that includes EVOH, in terms of boron) is 1 ppm or more, 10 ppm or more, or 50 ppm or more, for example. Moreover, the upper limit of the boron compound is 2000 ppm or less, 1000 ppm or less, or 500 ppm or less, for example. When EVOH contains a boron compound or phosphate compound in an amount within the above-mentioned range, it is likely that that EVOH has favorable thermal stability and is thus stable even when subjected to molten molding.

There is no particular limitation on a method of producing the EVOH-containing oxygen barrier layer (a) that contains the carboxylate compound, phosphate compound, or boron compound, and, for example, the above-mentioned compound may be added to and mixed with an EVOH-containing composition before pellets of the EVOH-containing composition are formed. There is no particular limitation on a method for adding the carboxylate compound, phosphate compound, or boron compound, and examples thereof include a method in which dry powder of the compound is added, a method in which a paste obtained by impregnating the compound with a predetermined solvent is added, a method in which a suspension obtained by suspending the compound in a predetermined liquid is added, a method in which a solution obtained by dissolving the compound in a predetermined solvent is added, and a method in which immersion into a predetermined solution is performed. In particular, it is preferable to employ the method in which a solution obtained by dissolving the compound in a predetermined solvent is added, or a method in which immersion into a predetermined solution is performed because the above-mentioned compound can be uniformly dispersed in EVOH. A solvent to be used in such methods is not particularly limited, but is preferably water in consideration of the solubility of the compound to be added as an additive, the cost, the handleability, the work environment safety, and the like.

When the oxygen barrier layer (a) in the multilayer structure (A') contains EVOH as a main component, the ratio of EVOH in the oxygen barrier layer (a) is 60 mass% or more, 70 mass% or more, 80 mass% or more, 90 mass% or more, or 100 mass%, for example. Here, the term "the main component of the oxygen barrier layer (a)" as used herein refers to a component whose ratio (mass%) in the oxygen barrier layer (a) is the largest.

When the oxygen barrier layer (a) in the multilayer structure (A') contains EVOH as a main component, the lower limit of the average thickness of the oxygen barrier layers (a) is 3 µm or more, 5 µm or more, or 10 µm or more, for example, and the upper limit of the average thickness of the oxygen barrier layers (a) is 100 µm or less or 50 µm or less, for example. Here, the term "the average thickness of the oxygen barrier layers (a)" as used herein refers to a value obtained by dividing the total thickness of all of the oxygen barrier layers (a) that contain EVOH as a main component and that are included in the multilayer structure (A') by the number of the oxygen barrier layers (a). When the average thickness of the oxygen barrier layers (a) is within the above-mentioned range, the container body (A) included in the packaging container of the present invention is likely to have favorable durability, flexibility, and appearance properties.

### Composite Structure Containing Phosphorus and Polyvalent Metal Element

A composite structure containing phosphorus and a polyvalent metal element includes a barrier layer formed through reaction between a phosphorus compound and a polyvalent metal compound. This structure can be formed by mixing a solution containing a phosphorus compound and a solution or dispersion liquid containing a polyvalent metal compound to prepare a coating agent, applying the coating agent onto a substrate, and reacting the polyvalent metal compound and the phosphorus compound. Here, a bond represented as M-O-P, where M represents the polyvalent metal atom, is formed between the polyvalent metal atom M and a phosphorus atom. The characteristic band of the M-O-P bond can be observed in a region between 1080 cm⁻¹ and 1130 cm⁻¹ in an infrared absorption spectrum, and the maximum absorption wave number in a region between 800 cm⁻¹ and 1400 cm⁻¹ in the infrared absorption spectrum of the composite structure is preferably within a range of 1080 cm⁻¹ to 1130 cm⁻¹. When the maximum absorption wave number of the composite structure is within the above-mentioned range, the composite structure is likely to have excellent oxygen barrier properties.

There is no particular limitation on the substrate onto which the coating agent is to be applied, and examples thereof include resins such as thermoplastic resins and thermosetting resins; fiber assemblies such as fabrics and papers; wood; and glass. In particular, thermoplastic resins and the fiber assemblies are preferable, and the thermoplastic resins are more preferable. There is no particular limitation on the shape of the substrate, and the substrate may be a film, a sheet, or the like having a layer shape. The substrate is more preferably made of a thermoplastic resin film or paper, and even more preferably made of a thermoplastic resin film. The thermoplastic resin film is preferably made of polyester, and is more preferably made of polyethylene terephthalate because favorable mechanical strength can be imparted to the composite structure.

There is no particular limitation on the polyvalent metal element as long as two or more molecules of a phosphorus compound can react with the polyvalent metal element, and any polyvalent metal element can be used. A polyvalent semimetal may also be used. Examples of the polyvalent metal element include elements such as magnesium, calcium, zinc, aluminum, silicon, titanium, and zirconium. Aluminum is particularly preferable.

There is no particular limitation on the polyvalent metal element compound as long as it can react with a phosphorus compound to produce a composite structure, and any polyvalent metal element compound can be used. A solution obtained by dissolving the polyvalent metal compound in a solvent or a dispersion liquid obtained by dispersing minute particles of the polyvalent metal compound in a solvent may be used as the polyvalent metal compound, and an aqueous solution containing aluminum nitrate as the polyvalent metal compound can be used.

Furthermore, a dispersion liquid obtained by dispersing minute particles of the polyvalent metal compound in water or an aqueous solvent can be used. Such a dispersion liquid is preferably a dispersion liquid containing minute particles of aluminum oxide. In general, minute particles of a polyvalent metal oxide include hydroxy groups on their surfaces, and hydroxy groups present thereon can react with the phosphorus compound to form the above-mentioned bond. Minute particles of a polyvalent metal oxide can be synthesized as follows, for example: a compound in which a hydrolyzable characteristic group binds to a metal atom is prepared as a raw material and is then hydrolyzed, and the obtained hydrolysis product is condensed. Examples of the raw material include aluminum chloride, aluminum triethoxide, and aluminum isopropoxide. Examples of a method for condensing the hydrolysis product include liquid phase synthesis methods such as a sol-gel method. The minute particles of the polyvalent metal oxide preferably have a spherical shape, a flat shape, a polyhedral shape, a fiber-like shape, or a needle-like shape, for example, and more preferably have a fiber-like shape or a needle-like shape because the oxygen barrier properties can be improved. Furthermore, the average particle diameter of the minute particles of the polyvalent metal oxide is preferably set to 1 nm or more and 100 nm or less in order to improve the oxygen barrier properties and transparency.

There is no particular limitation on the phosphorus compound as long as it can react with a polyvalent metal compound to form the above-mentioned bond, and any phosphorus compound can be used. Examples of the phosphorus compound include phosphoric acid-based compounds and derivatives thereof. Specific examples thereof include phosphoric acid, polyphosphoric acid, phosphorous acid, and phosphonic acid. Examples of the polyphosphoric acid include pyrophosphoric acid, triphosphoric acid, and polyphosphoric acid obtained through condensation of four or more molecules of phosphoric acid. Examples of the derivatives of the phosphoric acid-based compound include phosphates, esters (e.g., trimethyl phosphate), halides, and dehydrates (e.g., phosphorus pentoxide).

A solution containing the phosphorus compound can be used, and examples thereof include aqueous solutions containing water as a solvent, and solutions such as lower alcohol solutions containing a hydrophilic organic solvent.

The coating agent can be obtained by mixing a solution or dispersion liquid of the polyvalent metal compound and a solution of the phosphorus compound. Other components may be added to the coating agent. Examples of the other components include macromolecular compounds, metal complexes, viscosity compounds, cross-linking agents, plasticizers, antioxidants, ultraviolet absorbers, and flame retardants. Examples of the macromolecular compounds include polyvinyl alcohol, partially saponified polyvinyl acetate, polyhydroxyethyl (meth)acrylate, polysaccharides (e.g., starch), acrylic polymers (e.g., polyacrylic acid, polymethacrylic acid, and acrylic acid-methacrylic acid copolymers) and salts thereof, ethylene-vinyl alcohol copolymers, ethylene-maleic anhydride copolymers, styrene-maleic anhydride copolymers, isobutylene-maleic anhydride alternating copolymers, ethylene-acrylic acid copolymers, and saponified ethylene-ethyl acrylate copolymers.

The composite structure containing phosphorus and a polyvalent metal element can be formed as follows: a coating film is obtained by applying the above-mentioned coating agent and then removing a solvent through drying, and the above-mentioned bond is formed by heating the coating film, for example, to react the polyvalent metal compound and the phosphorus compound. The heat treatment is preferably performed at a temperature of 110°C or higher, more preferably 120°C or higher, even more preferably 140°C, and even more preferably 170°C or higher. If the heat treatment is performed at a low temperature, more time will be required to form a sufficient amount of the bonds, and the productivity may be reduced. The upper limit of a temperature at which the heat treatment is performed varies depending on the type of substrate film, and is 240°C or lower or 220°C or lower, for example. The lower limit of time required for the heat treatment is 0.1 seconds or more, 1 second or more, or 5 seconds or more, for example. The upper limit of time required for the heat treatment is 1 hour or less, 15 minutes or less, or 5 minutes or less, for example. It should be noted that such heat treatment may be performed under an air atmosphere, a nitrogen atmosphere, or an argon atmosphere.

The lower limit of the average thickness of a single oxygen barrier layer (a) containing, as a main component, the composite structure containing phosphorus and a polyvalent metal element is 0.05 µm or more or 0.1 µm or more, for example. The upper limit of the average thickness of a single oxygen barrier layer (a) containing, as a main component, the composite structure containing phosphorus and a polyvalent metal element is 4 µm or less or 2 µm or less, for example. It should be noted that the term "the average thickness of a single oxygen barrier layer (a) containing, as a main component, the composite structure containing phosphorus and a polyvalent metal element" as used herein refers to a value obtained by dividing the total thickness of all of the oxygen barrier layers (a) that contain the composite structure as a main component and that are included in the multilayer structure (A') by the number of the oxygen barrier layers (a). If the average thickness of a single oxygen barrier layer (a) is smaller than the lower limit, it will be difficult to form layers having a uniform thickness, and thus the durability of the obtained multilayer structure may be deteriorated. If the average thickness of a single oxygen barrier layer
(a) is larger than the upper limit, the flexibility, extensibility, heat moldability, and the like of the obtained multilayer structure may be deteriorated.

### Modified Starch

There is no particular limitation on starch that can be used as a raw material of modified starch, and examples thereof include starch derived from raw materials such as wheat, corn, tapioca, potatoes, rice, oats, arrowroot, and peas. Starch is preferably high-amylose starch, and more preferably high-amylose cornstarch or high-amylose tapiocastarch.

It is preferable that the modified starch is prepared by chemically modifying the above-mentioned starch such that a hydroxy group is substituted by a functional group such as an ether group, an ester group, or a combination thereof. The modified starch is preferably prepared by modifying the above-mentioned starch such that the starch includes a hydroxyalkyl group having 2 to 6 carbon atoms, or by modifying the above-mentioned starch through reaction with a carboxylic anhydride. When the modified starch is prepared by modifying the above-mentioned starch such that the starch includes a hydroxyalkyl group having 2 to 6 carbon atoms, it is preferable that a substituent for the modified starch includes a functional group having 2 to 4 carbon atoms, such as a hydroxyethyl group or hydroxybutyl group from which a hydroxy ether substituent can be produced. When the modified starch is prepared by modifying the above-mentioned starch through reaction with a carboxylic anhydride, the functional group is preferably a butanoic ester or a lower homologue, and more preferably an acetic ester. Dicarboxylic anhydrides such as a maleic anhydride, a phthalic anhydride, and an octenyl succinic anhydride can also be used to manufacture ester derivatives.

The modified starch is preferably hydroxypropylated amylose starch that includes a hydroxypropyl group, and more preferably hydoroxypropylated high-amylose starch.

The substitution degree of modified starch is represented as the average number of substituents per anhydroglucose unit, and the maximum value thereof is generally 3. The substitution degree of the modified starch is preferably 0.05 or more and less than 1.5.

The modified starch may include another starch. An example of the other starch is a mixture of high-amylose starch and low-amylose starch.

The modified starch may contain water. Water can serve as a plasticizer for modified starch. The upper limit of the water content is 20 mass% or less or 12 mass% or less, for example. In general, the water content of the oxygen barrier layer (a) containing the modified starch as a main component is an equilibrium water content at a relative humidity in the usage environment.

The modified starch may contain one or more water-soluble polymers. There is no particular limitation on the water-soluble polymer, and examples thereof include polyvinyl acetate, polyvinyl alcohol, and a combination thereof. In particular, polyvinyl alcohol is preferable. The upper limit of the content of one or more water-soluble polymers is 20 mass% or less or 12 mass% or less, for example. The lower limit of the content of one or more water-soluble polymers is 1 mass% or more or 4 mass% or more, for example.

The modified starch may contain one or more plasticizers. The plasticizer is not particularly limited, but is preferably a polyol. Examples of the polyol include sorbitol, glycerol, maltitol, xylitol, and combinations thereof. The upper limit of the content of one or more plasticizers in the modified starch is 20 mass% or less or 12 mass% or less, for example.

The modified starch may include a lubricant. Examples of the lubricant include fatty acids having 12 to 22 carbon atoms, fatty acid salts having 12 to 22 carbon atoms, and combinations thereof. The content of the lubricant in the modified starch is 5 mass% or less, for example.

The lower limit of the average thickness of a single oxygen barrier layer (a) containing the modified starch as a main component is 10 µm or more or 100 µm or more, for example. The upper limit of the average thickness of a single oxygen barrier layer (a) containing the modified starch as a main component is 1000 µm or less or 800 µm or less, for example. It should be noted that the term "the average thickness of a single oxygen barrier layer (a) containing the modified starch as a main component" as used herein refers to a value obtained by dividing the total thickness of all of the oxygen barrier layers (a) that contain the modified starch as a main component and that are included in the multilayer structure (A') by the number of the oxygen barrier layers (a). If the average thickness of a single oxygen barrier layer (a) is smaller than the lower limit, it will be difficult to form layers having a uniform thickness, and thus the durability of the obtained multilayer structure may be deteriorated. If the average thickness of a single oxygen barrier layer (a) is larger than the upper limit, the flexibility, extensibility, heat moldability, and the like of the obtained multilayer structure may be deteriorated.

### Inorganic Layered Compound

The barrier layer that includes the inorganic layered compound is, for example, a layer that is made of a thermoplastic resin in which the inorganic layered compound is dispersed and that exhibits barrier properties caused by the inorganic layered compound. There is no particular limitation on the thermoplastic resin to be used in the barrier layer that includes the inorganic layered compound, and examples thereof include polyamides, and ethylene-vinyl alcohol copolymers.

Examples of the inorganic layered compound include inorganic layered compounds such as expansive mica, clay, montmorillonite, smectite, and hydrotalcite. The inorganic layered compound may also be an organic-modified inorganic layered compound obtained through organic treatment.

The inorganic layered compound is constituted by plate crystals, for example, and has any external shape such as a circular shape, noncircular shape, elliptical shape, substantially oblong shape, or substantially cocoon shape. It is preferable that the average length of the long sides of the plate crystals included in the inorganic layered compound that can be measured using an electron microscope is within a predetermined range.

The average length of the long side of the inorganic layered compound is preferably 70 nm or more, more preferably 80 nm or more, and even more preferably 90 nm or more. The inorganic layered compound is oriented in a film plane due to stress generated during expansion, but if the average length of the long side of the inorganic layered compound is less than 70 nm, the orientation degree is insufficient, and thus sufficient oxygen permeability cannot be obtained in some cases. On the other hand, the average length of the long side of the inorganic layered compound may also be 2000 nm or less.

It is also preferable that the inorganic layered compound does not contain a bulk substance having a thickness of more than 2 µm. If the inorganic layered compound contains a bulk substance having a thickness of more than 2 µm, transparency and extensibility may be deteriorated.

The content of the inorganic layered compound in the barrier layer containing the inorganic layered compound is preferably 0.3 to 20 mass% relative to the mass of the barrier layer.

### Inorganic Deposited Layer

The inorganic deposited layer is a barrier layer obtained by depositing an inorganic substance on a substrate, for example. Examples of the substrate that can be used for the inorganic deposited layer include resins such as thermoplastic resins and thermosetting resins; fiber assemblies such as fabrics and papers; wood; and glass. Thermoplastic resins and the fiber assemblies are preferable, and the thermoplastic resins are more preferable. When the above-mentioned resins are used to form the substrate, the substrate is preferably a film, a sheet, or the like having a layer shape.

Examples of the thermoplastic resins to be used for the substrate include polyolefin-based resins such as polyethylene and polypropylene; polyester-based resins such as polyethylene terephthalate (PET), polyethylene-2,6-naphthalate, polybutylene terephthalate, and copolymers thereof; polyamide-based resins such as nylon-6, nylon-66, and nylon-12; hydroxy group-containing polymers such as polyvinyl alcohol and ethylene-vinyl alcohol copolymers; polystyrene; poly(meth)acrylic esters; polyacrylonitrile; polyvinyl acetate; polycarbonate; polyarylate; regenerated cellulose; polyimide; polyetherimide; polysulfone; polyethersulfone; polyether ether ketone; and ionomer resins. At least one thermoplastic resin selected from the group consisting of polyethylene, polypropylene, polyethylene terephthalate, nylon-6, and nylon-66 is preferable.

When a film made of a thermoplastic resin is used as the substrate, the substrate may be a stretched film or an unstretched film. A stretched film is preferable because the resultant multilayer structure has excellent processing suitability (for printing or laminating), and a biaxially stretched film is more preferable. The biaxially stretched film may be a biaxially stretched film manufactured using any of a simultaneous biaxial stretching method, a successive biaxial stretching method, and a tubular stretching method.

Examples of papers to be used for the substrate include kraft paper, high-quality paper, simili paper, glassine paper, parchment paper, synthetic paper, white paperboards, manilla boards, milk-carton boards, cup base paper, and ivory boards.

When the substrate has a layer shape, the thickness thereof is preferably 1 to 1,000 µm, more preferably 5 to 500 µm, and even more preferably 9 to 200 µm, because the resultant multilayer structure has favorable mechanical strength and processability.

Examples of the inorganic substance include metals such as aluminum, zinc, indium, nickel, titanium, and chromium; metal oxides such as silicon oxide and aluminum oxide; metal nitrides such as silicon nitride; metal oxynitrides such as silicon oxynitride; and metal carbonitrides such as silicon carbonitride. It is preferable that the inorganic deposited layer is formed of any of aluminum, aluminum oxide, silicon oxide, magnesium oxide, and silicon nitride, or a combination thereof because the inorganic deposited layer has excellent barrier properties against oxygen or water vapor.

There is no particular limitation on a method for forming the inorganic deposited layer, and examples thereof include physical vapor deposition methods such as vacuum deposition methods (e.g., a resistance heating deposition method, an electron beam deposition method, and a molecular beam epitaxy method), an ion plating method, and sputtering methods (e.g., a dual magnetron sputtering); and chemical vapor deposition methods such as thermochemical vapor deposition methods (e.g., a catalytic chemical vapor deposition method), photochemical vapor deposition methods, plasma chemical vapor deposition methods (e.g., a capacitive coupled plasma method, an inductive coupled plasma method, a surface wave plasma method, and an electron cyclotron resonance plasma method), atomic layer deposition methods, and organic metal vapor deposition methods.

Although the thickness of the inorganic deposited layer varies depending on the types of components included in the inorganic deposited layer, the thickness thereof is preferably 0.002 to 0.5 µm, more preferably 0.005 to 0.2 µm, and even more preferably 0.01 to 0.1 µm. A thickness with which favorable barrier properties and mechanical properties are provided to the multilayer structure can be selected from this range. If the thickness of the inorganic deposited layer is less than 0.002 µm, the inorganic deposited layer is less likely to reproducibly exhibit barrier properties against oxygen and water vapor, and the inorganic deposited layer does not exhibit sufficient barrier properties in some cases. If the thickness of the inorganic deposited layer is more than 0.5 µm, it is likely that the barrier properties of the inorganic deposited layer is deteriorated when the multilayer structure is stretched or bent.

### Metal Foil

A metal foil is a single-layer or multilayer structure made of a metal having excellent ductility. An example of the metal included in the metal foil is aluminum. The metal foil is in the form of an aluminum foil or aluminum tape, for example.

### Thermoplastic Resin

In the present invention, the multilayer structure (A') may include at least one thermoplastic resin layer.

The number of the thermoplastic resin layers in the multilayer structure (A') is preferably one or more from the viewpoint of improving impact resistance, and more preferably two or more. It should be noted that when the multilayer structure (A') includes a plurality of thermoplastic resin layers, materials constituting the layers may be the same or different.

The thermoplastic resin layer contains, as a main component, a resin composition that includes a thermoplastic resin. The thermoplastic resin layer may contain, as a main component, a single type of thermoplastic resin or a mixture of a plurality types of thermoplastic resins. The multilayer structure (A') of the present invention is formed by layering the thermoplastic resin layers containing, as a main component, a resin composition that includes a thermoplastic resin, and thus the extensibility and thermal moldability can be improved.

The lower limit of the average thickness of a single thermoplastic resin layer is 100 µm or more or 200 µm or more, for example. The upper limit of the average thickness of a single thermoplastic resin layer is 1000 µm or less, 500 µm or less, or 400 µm or less, for example. Here, the term "the average thickness of a single thermoplastic resin layer" as used herein refers to a value obtained by dividing the total thickness of all of the thermoplastic resin layers that are included in the multilayer structure (A') by the number of the thermoplastic resin layers. When the average thickness of a single thermoplastic resin layer is 100 µm or more, the thickness can be easily adjusted when the thermoplastic resin layers are layered, and the durability of the multilayer structure (A') can be further improved. When the average thickness of a single thermoplastic resin layer is 500 µm or less, favorable thermal moldability is likely to be obtained.

There is no particular limitation on the thermoplastic resin included in the thermoplastic resin layer as long as the thermoplastic resin is softened and exhibits plasticity when heated to the glass transition temperature or melting point, and examples thereof include polyolefin resins (e.g., polyethylene resins and polypropylene resins), grafted polyolefin resins obtained through graft modification with an unsaturated carboxylic acid or an ester thereof, halogenated polyolefin resins, ethylene-vinyl acetate copolymer resins, ethylene-acrylic acid copolymer resins, ethylene-acrylic ester copolymer resins, polyester resins, polyamide resins, polyvinyl chloride resins, polyvinylidene chloride resins, acrylic resins, polystyrene resins, vinyl ester resins, ionomers, polyester elastomers, polyurethane elastomers, and aromatic or aliphatic polyketones. In particular, polyolefin resins are preferable because they have favorable mechanical strength and moldability, and polyethylene resins and polypropylene resins are more preferable.

### Additive

The thermoplastic resin layer may contain an additive as long as the object of the present invention is not impaired. Examples of the additive include resins other than the above-mentioned thermoplastic resin, thermostabilizers, ultraviolet absorbers, antioxidants, coloring agents, and fillers. When the thermoplastic resin layer contains the additive, the content of the additive is preferably 20 mass% or less, more preferably 10 mass% or less, and even more preferably 5 mass% or less relative to the total amount of the thermoplastic resin layer.

### Adherent Layer

In the present invention, the multilayer structure (A') may include at least one adherent layer (this may be abbreviated as "Ad" hereinafter).

In the multilayer structure (A'), the adherent layer is arranged between the oxygen barrier layer (a) and the thermoplastic resin layer, for example. There is no particular limitation on the number of the adherent layers included in the multilayer structure (A'). It should be noted that when the multilayer structure (A') includes a plurality of adherent layers, materials constituting the layers may be the same or different.

A known adherent resin can be used as a material of the adherent layer. A material of the adherent layer can be selected as appropriate by a person skilled in the art in accordance with a method for manufacturing a multilayer structure (A').

For example, when the multilayer structure (A') is manufactured using a lamination method, it is preferable to form the adherent layer by using a two-component polyurethane-based adhesive whose function is exhibited when a polyisocyanate component and a polyol component are mixed and reacted. Moreover, the adhesiveness can also be further improved by adding a small amount of an additive such as a known silane coupling agent to the adherent layer.

Alternatively, when the multilayer structure (A') is manufactured using a coextrusion molding method, there is no particular limitation on the adherent layer as long as the adherent layer has adhesiveness to the oxygen barrier layer (a) and the thermoplastic resin layer, but it is preferable to use an adherent resin that contains carboxylic acid-modified polyolefin. A modified olefin-based polymer containing a carboxyl group that is obtained by chemically (e.g., through addition reaction or graft reaction) bonding ethylenically unsaturated carboxylic acid, an ester thereof, or an anhydride thereof to an olefin-based polymer can be favorably used as the carboxylic acid-modified polyolefin. Examples of the olefin-based polymer include polyolefins such as polyethylene (e.g., low-pressure polyethylene, medium-pressure polyethylene, and high-pressure polyethylene), linear low-density polyethylene, polypropylene, and polybutene, and copolymers of an olefin and another monomer (e.g., vinyl ester or unsaturated carboxylic ester) such as an ethylene-vinyl acetate copolymer and an ethylene-acrylic ethyl ester copolymer. The linear low-density polyethylene, ethylene-vinyl acetate copolymer (the content of vinyl acetate is 5 to 55 mass%), and ethylene-acrylic ethyl ester copolymer (the content of acrylic ethyl ester is 8 to 35 mass%) are preferable, and the linear low-density polyethylene and ethylene-vinyl acetate copolymer are particularly preferable. Examples of the ethylenically unsaturated carboxylic acid, the ester thereof, or the anhydride thereof include ethylenically unsaturated monocarboxylic acid or an ester thereof, and ethylenically unsaturated dicarboxylic acid, or a monoester or diester thereof or the anhydride thereof. Out of these compounds, the ethylenically unsaturated dicarboxylic anhydride is preferable. Specific examples thereof include maleic acid, fumaric acid, itaconic acid, a maleic anhydride, an itaconic anhydride, maleic monomethyl ester, maleic monoethyl ester, maleic diethyl ester, and fumaric monomethyl ester, and maleic anhydride is particularly preferable.

The amount of the ethylenically unsaturated carboxylic acid or the anhydride thereof added or grafted to the olefin-based polymer (the graft amount refers to a modification degree) is 0.0001 mass% to 15 mass%, for example, and preferably 0.001 mass% to 10 mass%, relative to the olefin-based polymer. The addition reaction or graft reaction of the ethylenically unsaturated carboxylic acid or the anhydride thereof with the olefin-based polymer can be carried out by performing a radical polymerization method or the like in the presence of a solvent (e.g., xylene) and a catalyst (e.g., a peroxide), for example. The melt flow rate (MFR) of the thus-obtained carboxylic acid-modified polyolefin is preferably 0.2 g/10 minutes to 30 g/10 minutes, and more preferably 0.5 g/10 minutes to 10 g/10 minutes, when measured at 210°C. These adherent resins may be used alone or as a mixture of two or more.

In the present invention, the lower limit of the average thickness of the multilayer structure (A') is 100 µm or more or 200 µm or more, for example. The upper limit of the average thickness of the multilayer structure (A') is 2000 µm or less, 1000 µm or less, or 800 µm or less, for example. When the average thickness of the multilayer structure is 100 µm or more, excellent impact resistance is likely to be obtained. When the average thickness of the multilayer structure is 2000 µm or less, it is likely that the manufacturing cost is reduced, and favorable thermal moldability is obtained.

In the present invention, there is no particular limitation on the layer structure of the multilayer structure (A'), and the multilayer structure (A') may have a structure represented as T/E/T, E/Ad/T, T/Ad/E/Ad/T, or the like, where E represents the oxygen barrier layer (a), Ad represents the adherent layer, and T represents the thermoplastic resin layer. Each of the layers included in the multilayer structure (A') may be constituted by a single layer or multiple layers. It is preferable that the multilayer structure (A') includes the thermoplastic resin layer as the outermost layer from the viewpoint of improving the impact resistance.

The multilayer structure (A') can be manufactured using a known method such as a coextrusion molding method, a coinjection molding method, an extrusion lamination method, or a dry lamination method. Examples of the coextrusion molding method include a coextrusion lamination method, a coextrusion sheet molding method, a coextrusion inflation molding method, and coextrusion blow molding method.

### Lid Member (B)

FIG. 1(b) is referred to again. The layered structure (b-1) 134 and the layered structure (b-2) 136 included in the lid member (B) 130 of the packaging container 100 of the present invention are arranged such that the layered structure (b-2) 136 blocks all of the perforations 132 provided in the layered structure (b-1) 134. In the present invention, one or both of the layered structure (b-1) 134 and the layered structure (b-2) 136 include the oxygen barrier layer (b).

The water contact angle on the surface that constitutes the inner side of the lid member (B) is preferably 70° or less, more preferably 65° or less, and even more preferably 60° or less, when measured in accordance with JIS R3257 (1999, "Testing method of wettability of glass substrate"). Since the water contact angle is 70° or less, even if the packaging container of the present invention contains a content (e.g., food) containing a large amount of water, fogging inside the packaging container that may occur as time passes is prevented (for example, when the packaging container is displayed as a steam-sterilized product in a shop), thus making it easy to confirm the content visually. Moreover, fogging due to storage at a low temperature in a refrigerator or the like can also be suppressed, and the appearance properties of the lid member (B) is improved in this respect. Examples of a means for adjusting the water contact angle to 70° or less include using an appropriate material for the inner side of the lid member (B), and adding an anti-fogging agent, which will be described later, to the material constituting the inner side of the lid member (B).

### Layered Structure (b-1)

The perforations provided in the layered structure (b-1) pass therethrough from the front side to the back side, and the number of the perforations provided in the layered structure (b-1) is preferably 2 or more, more preferably 4 or more, and even more preferably 6 or more. In the present invention, the perforations are provided in order to discharge air inside the container body (A) when steam sterilization, which will be described later, is performed, and inject and discharge steam to perform efficient sterilization. The perforations can also be used to exchange oxygen inside the packaging container for nitrogen after the sterilization.

The perforations have any shape, and examples thereof include a circular shape, an elliptical shape, a rectangular shape, and a polygonal shape. The lower limit of the diameters of the perforations is 1 mm or more, 1.5 mm or more, or 2 mm or more, for example. Since the diameter of the diameters of the perforations is 1 mm or more, steam can easily flow into the container body (A) through layered structure (b-1) during the steam sterilization, thus making it possible to efficiently sterilize the content. Moreover, oxygen inside the container body (A) can be efficiently exchanged for nitrogen. The upper limit of the diameters of the perforations is 20 mm or less, 15 mm or less, or 10 mm or less, for example. If the diameters of the perforations are larger than the above-mentioned upper limit, there is a risk that contamination of the content with settling microbes is promoted after the steam sterilization.

The layered structure (b-1) is manufactured by providing the perforations in a layered structure (B') as described below.

### Layered Structure (B')

A layered structure (B') is a single-layer or multilayer structure that is used to produce the layered structure (b-1) and that is not provided with perforations. The layered structure (B') is preferably transparent or translucent for the reason that it is easy to visually confirm a content contained in the container body (A).

Examples of layers that can be included in the layered structure (B') include an oxygen barrier layer (b), a thermoplastic resin layer, an adhesive layer, and a sealant layer.

When the layered structure (B') includes the oxygen barrier layer (b), the number of the oxygen barrier layers (b) in the layered structure (B') is preferably 1 or more. It should be noted that when the layered structure (B') includes a plurality of oxygen barrier layers (b), materials constituting the layers may be the same or different.

The lower limit and the upper limit of the average thickness of a single oxygen barrier layer (b) can be set to be within the same ranges of the lower limit and the upper limit of the average thickness of a single oxygen barrier layer (a) that can be included in the multilayer structure (A'), for example. Here, the term "the average thickness of a single oxygen barrier layer (b)" refers to a value obtained by dividing the total thickness of all of the oxygen barrier layers (b) that can be included in the multilayer structure (B') by the number of the oxygen barrier layers (b).

Examples of a material that can be used to form the oxygen barrier layer (b) include the same material as that of the oxygen barrier layer(a) that can be included in the multilayer structure (A'). Preferable examples of such a material include EVOH, polyamide, a composite structure containing phosphorus and a polyvalent metal element, an inorganic layered compound, an inorganic deposited layer, modified starch, and combinations thereof. It is preferable that the oxygen barrier layer (b) is made of a material containing EVOH.

When the layered structure (B') includes the thermoplastic resin layer and/or the adhesive layer, the number of these layers in the layered structure (B') is preferably 1 or more. It should be noted that when the layered structure (B') includes a plurality of thermoplastic resin layers and/or adhesive layers, materials constituting the layers may be the same or different.

The lower limit and the upper limit of the average thickness of a single thermoplastic resin layer in the layered structure (B') can be set to be within the same ranges of the lower limit and the upper limit of the average thickness of a single thermoplastic resin layer that can be included in the multilayer structure (A'), for example. Here, the term "the average thickness of a single thermoplastic resin layer in the layered structure (B')" as used herein refers to a value obtained by dividing the total thickness of all of the thermoplastic resin layers that can be included in the layered structure (B') by the number of the thermoplastic resin layers.

Examples of materials that can be used to form the thermoplastic resin layer and the adhesive layer in the layered structure (B') include the same materials as those of the thermoplastic resin layer and the adhesive layer that can be included in the multilayer structure (A').

When the layered structure (B') includes the sealant layer, the sealant layer constitutes at least one of the outermost layers of the layered structure (B').

The sealant layer has a melting point of 180°C or lower, for example, preferably 110°C or higher and 175°C or lower, and more preferably 120°C or higher and 170°C or lower. Since the sealant layer has such a melting point, sealing between the layered structure (B') and the multilayer structure (A') constituting the container body (A) is improved, thus making it possible to increase adhesion between the container body (A) and the lid member (B) (i.e., the layered structure (B')) in the packaging container of the present invention.

Examples of a material constituting such a sealant layer include polyolefin resins (e.g., polyethylene resins and polypropylene resins), grafted polyolefin resins obtained through graft modification with an unsaturated carboxylic acid or an ester thereof, halogenated polyolefin resins, ethylene-vinyl acetate copolymer resins, ethylene-acrylic acid copolymer resins, ethylene-acrylic ester copolymer resins, polyester resins, polyamide resins, polyvinyl chloride resins, polyvinylidene chloride resins, acrylic resins, polystyrene resins, vinyl ester resins, ionomers, polyester elastomers, polyurethane elastomers, and aromatic or aliphatic polyketones. The polyolefin resins are preferable because they have favorable durability against steam sterilization (deformation due to steam sterilization is less likely to occur, or delamination of the layers is less likely to occur, for example), and the polypropylene resins are preferable because they have durability against steam sterilization performed at a temperature of higher than 110°C.

It is also preferable that the layered structure (B') contains an anti-fogging agent for the purpose of imparting anti-fogging properties to the layered structure (B'). When the layered structure (B') is a multilayer structure, it is preferable that the anti-fogging agent is contained in a layer on a side that is opposed to the container body (A) when the layered structure (B') is used as the lid member (B), for example.

The anti-fogging agent that can be used in the layered structure (B') encompass all the agents having an anti-fogging effect that are commercially available as common "anti-fogging agents", "anti-fogging agents", or the like. Examples of the anti-fogging agent include fatty acid esters of polyhydric alcohols, ethylene oxide adducts of higher fatty acid amines, and higher fatty acid alkanol amides, and these compounds may be used alone or in combination of two or more.

The amount of the anti-fogging agent that can be added to the layered structure (B') is not necessarily limited, and is preferably 15000 ppm to 30000 ppm, and more preferably 17000 ppm to 25000 ppm, relative to the material constituting the layer of the layered structure (B') to which the anti-fogging agent is to be added, for example. Since the content of the anti-fogging agent is within such a range, the layered structure (B') (i.e., the lid member (B)) can exhibit an immediate anti-fogging effect, the moldability of the layered structure (B') itself is not reduced, and the layered structure (B') may be free from a problem of bleeding of the anti-fogging agent.

The anti-fogging agent is oriented in the layer of the layered structure (B') to which it has been added such that the hydrophilic group moiety is located outside the layer and the lipophilic group moiety is located inside the layer, and thus the wettability of the outer surface of the layer is improved. As a result, water condensed on the layer surface does not form waterdrops but spreads in the form of a thin film, thus making it possible to prevent fogging of the layer surface.

The layer included in the layered structure (B') that contains the anti-fogging agent may contain an additive such as an antioxidant, a thermostabilizer, or a lubricant. The content thereof can be selected as appropriate by a person skilled in the art in accordance with the type of additive, or the like, and is preferably 10 parts by weight or less relative to 100 parts by weight of the materials (excluding the anti-fogging agent) in the layer of the layered structure (B') that contains the anti-fogging agent. If the content of such an additive is more than 10 parts by weight, the anti-fogging effect provided by the anti-fogging agent may be reduced.

In the present invention, the lower limit of the average thickness of the layered structure (B') is 40 µm or more or 50 µm or more, for example. The upper limit of the average thickness of the layered structure (B') is 400 µm or less, 350 µm or less, or 300 µm or less, for example. When the average thickness of the layered structure (B') is 40 µm or more, excellent impact resistance is likely to be obtained. When the average thickness of the layered structure (B') is 400 µm or less, it is likely that the manufacturing cost is reduced, and favorable thermal moldability is obtained.

It should be noted that, when the layered structure (B') includes multiple layers, the layered structure (B') may have a structure represented as T/E/T, E/Ad/T, T/Ad/E/Ad/T, T/E/Ad/T, or the like (where E represents the oxygen barrier layer (b), Ad represents the adherent layer, and T represents the thermoplastic resin layer), for example. When the layered structure (B') includes multiple layers, the layered structure (B') can be manufactured using a known method such as a coextrusion molding method, a coinjection molding method, an extrusion lamination method, or a dry lamination method.

In the present invention, irrespective of whether the layered structure (B') includes a single layer or multiple layers, the layered structure (B') is designed such that the overall oxygen permeability is 100 cc-20 µm/(m²·day·atm) or less, for example, preferably 50 cc-20 µm/(m²·day·atm) or less, and more preferably 10 cc-20 µm/(m²·day·atm) or less when measured under the conditions of 20°C and 65%RH in accordance with JIS-K7126-2 (2006) Part 2 (isopiestic method). Since the overall oxygen permeability of the layered structure (B') is within such a range, the gas barrier properties can be sufficiently maintained between the container body (A) and the lid member (B) (i.e., the layered structure (B')) even when a content is contained.

In the present invention, irrespective of whether the layered structure (B') includes a single layer or multiple layers, the layered structure (B') has an overall puncture strength of 10 N to 40 N, for example, and preferably 13 N to 35 N. Since the overall puncture strength of the layered structure (B') is within such a range, perforations can be efficiently formed in the layered structure (B') when the layered structure (b-1) is produced.

### Layered Structure (b-2)

A layered structure (b-2) is a single-layer or multilayer structure. The layered structure (b-2) may be transparent or translucent for the reason that it is easy to visually confirm a content contained in the container body (A).

Examples of layers that can be included in the layered structure (b-2) include an oxygen barrier layer (b), a thermoplastic resin layer, and an adhesive layer.

When the layered structure (b-2) includes the oxygen barrier layer (b), the number of the oxygen barrier layers (b) in the layered structure (b-2) is preferably 1 or more. It should be noted that when the layered structure (b-2) includes a plurality of oxygen barrier layers (b), materials constituting the layers may be the same or different.

The lower limit and the upper limit of the average thickness of a single oxygen barrier layer (b) can be set to be within the same ranges of the lower limit and the upper limit of the average thickness of a single oxygen barrier layer (a) that can be included in the multilayer structure (A'), for example. Examples of the material that can constitute the oxygen barrier layer (b) include the same materials as those of the oxygen barrier layer (a) that can be included in the multilayer structure (A'), for example. EVOH, polyamide, a composite structure containing phosphorus and a polyvalent metal element, an inorganic layered compound, an inorganic deposited layer, a metal foil, modified starch, and combinations thereof are preferable, and the metal foil is more preferable.

When the layered structure (b-2) includes the thermoplastic resin layer and/or the adhesive layer, the number of the thermoplastic resin layers and the number of the adhesive layers in the layered structure (b-2) is preferably 1 or more. It should be noted that when the layered structure (b-2) includes a plurality of thermoplastic resin layers and/or adhesive layers, materials constituting the layers may be the same or different.

The lower limit and the upper limit of the average thickness of a single thermoplastic resin layer in the layered structure (b-2) can be set to be within the same ranges of the lower limit and the upper limit of the average thickness of a single thermoplastic resin layer that can be included in the multilayer structure (A'), for example. Here, the term "the average thickness of a single thermoplastic resin layer in the layered structure (b-2)" as used herein refers to a value obtained by dividing the total thickness of all of the thermoplastic resin layers that can be included in the layered structure (b-2) by the number of the thermoplastic resin layers.

Examples of materials that can be used to form the thermoplastic resin layer and the adhesive layer in the layered structure (b-2) include the same materials as those of the thermoplastic resin layer and the adhesive layer that can be included in the multilayer structure (A').

The layered structure (b-2) may contain the same anti-fogging agent as the anti-fogging agent used in the layered structure (B') for the purpose of imparting anti-fogging properties to the layered structure (b-2). The content of the anti-fogging agent in the layered structure (b-2) is not necessarily limited, but the same content as in the case of the layered structure (B') can be selected by a person skilled in the art, for example. Furthermore, the layer included in the layered structure (b-2) that contains the anti-fogging agent may contain an additive such as an antioxidant, a thermostabilizer, or a lubricant. The content thereof can also be selected as appropriate by a person skilled in the art.

In the present invention, the lower limit of the average thickness of the layered structure (b-2) is 40 µm or more or 50 µm or more, for example. The upper limit of the average thickness of the layered structure (b-2) is 400 µm or less, 350 µm or less, or 300 µm or less, for example. When the average thickness of the layered structure (b-2) is 40 µm or more, excellent impact resistance is likely to be obtained. When the average thickness of the layered structure (b-2) is 400 µm or less, it is likely that the manufacturing cost is reduced, and favorable thermal moldability is obtained.

It should be noted that, when the layered structure (b-2) includes multiple layers, the layered structure (b-2) may have a structure represented as T/E/T, E/Ad/T, T/Ad/E/Ad/T, T/E/Ad/T, or the like (where E represents the oxygen barrier layer (b), Ad represents the adherent layer, and T represents the thermoplastic resin layer), for example. When the layered structure (b-2) includes multiple layers, the layered structure (b-2) can be manufactured using a known method such as a coextrusion molding method, a coinjection molding method, an extrusion lamination method, or a dry lamination method.

In the preset invention, the lid member (B) includes the layered structure (b-1) and the layered structure (b-2) as described above. Here, in the lid member (B), the layered structure (b-2) completely blocks the perforations in the layered structure (b-1). It should be noted that, in the lid member (B), a sticky layer is provided between the layered structure (b-1) and the layered structure (b-2) in order to increase adhesion therebetween. There is no particular limitation on a material constituting the sticky layer, and examples thereof include acrylic polymers and gluing agents containing a tackifier resin having a hydroxy group.

Homopolymers or copolymers containing a (meth)acrylic ester as a main component can be used as the acrylic polymer that can be used as a material constituting the sticky layer, and examples thereof include methyl (meth)acrylate, ethyl (meth)acrylate, butyl (meth)acrylate, and 2-ethylhexyl (meth)acrylate. In addition, (meth)acrylic acid, glycidyl (meth)acrylate, 2-hydroxyethyl (meth)acrylate, N-methylol (meth)acrylamide, or the like can be used together as a cross-linkable monomer. Furthermore, another copolymerizable monomer such as vinyl acetate or styrene can be used together as needed to an extent that the sticky properties of the (meth)acrylic ester (co-)polymer is not impaired.

The acrylic polymers can be manufactured using a known method.

For example, the acrylic polymers can be easily manufactured using a solution polymerization method in which a (meth)acrylic ester is dissolved in a solvent such as ethyl acetate alone or together with another copolymerizable monomer, various known polymerization initiators such as azo-based or peroxide-based polymerization initiators are added thereto, and then the resultant solution is heated.

It is preferable to use a resinate ester having a hydroxy value of 10 to 25 that is obtained through reaction between resin acid and polyhydric alcohol as the tackifier resin that can be used as a material constituting the sticky layer. Examples of the resin acid include resinate monomers such as rosins, and examples of the rosins include gum rosin, wood rosin, and tall oil rosin. The resin acid preferably contains a resinate dimer in an amount of 5 wt% or more, and more preferably 10 wt% or more, because particularly excellent sticky properties are exhibited even at high temperatures. It should be noted that the resinate dimer is commonly called polymerized rosin, and refers to a dimerization product of a resinate monomer such as rosins. Examples of the polyhydric alcohol include dihydric alcohols such as ethylene glycol, diethylene glycol, and triethylene glycol; trihydric alcohols such as glycerin; and alcohols having four or more hydroxy groups such as pentaerythritol, dipentaerythritol, and polyglycerin.

With the packaging container of the present invention, the entry of bacteria, contaminants such as dust, and oxygen can be prevented, and the quality of a sterilized content contained therein can be maintained for a long period of time. Also, even when the packaging container of the present invention is stored in a refrigerator or freezer, fogging is suppressed or prevented, thus making it possible to improve the visibility of a content. Accordingly, the packaging container of the present invention is useful as a steam-sterilized product containing a sterilized content.

### Steam-Sterilized Product

A steam-sterilized product of the present invention includes the packaging container and a steam-sterilized content. Specifically, in the steam-sterilized product of the present invention, a sterilized content is placed on the inner surface of the container body (A) of the packaging container, and the opening portion of the container body (A) is hermetically sealed by the lid member (B) included in the packaging container.

In the steam-sterilized product of the present invention, the movement of air (e.g., oxygen) between a region surrounded by the container body (A) and the lid member (B) (hermetically sealed space formed by the container body (A) and the lid member (B)) and the outside is completely blocked by the container body (A) and the lid member (B). It is preferable that a predetermined gas concentration is consequently kept in the hermetically sealed space inside the steam-sterilized product.

In one embodiment, the oxygen concentration in the region surrounded by the container body (A) and the lid member (B) (hermetically sealed space) in the steam-sterilized product of the present invention is 5 vol% or less, for example, and preferably 3 vol% or less. Since the oxygen concentration in the hermetically sealed space is set as described above, the oxygen concentration in the hermetically sealed space can be kept at a relatively low level even if the steam-sterilized product is stored for a long period of time. This makes it possible to suppress the progression of deterioration and degeneration of the product due to decay or oxidation of the content, and substantially extend the shelf life of the content.

In one embodiment, the carbon dioxide concentration in the region surrounded by the container body (A) and the lid member (B) (hermetically sealed space) in the steam-sterilized product of the present invention is 0.5 vol% or more and 40 vol% or less, for example, and preferably 5 vol% or more and 35 vol% or less. Since the carbon dioxide concentration in the hermetically sealed space is set as described above, the proliferation of common living bacteria can be suppressed, and a change in taste of the content can be suppressed.

Furthermore, the sealed space in the steam-sterilized product of the present invention may be filled with sterile gas (e.g., oxygen gas or air) or inert gas (e.g., nitrogen gas or carbon dioxide) for the purpose of preventing decay or oxidation of the content.

The steam-sterilized product of the present invention can contain various contents. The content is an article that is not desired to be in contact with bacteria, contaminants such as dust, and oxygen during storage or transport, for example, and food, cosmetics, medicines, and the like are encompassed. Food is preferable, and food whose appearance and quality can be maintained even when steam sterilization is performed at a high temperature and high pressure (e.g., food that is contained in the solid form) is particularly preferable.

Examples of food that can be contained in the steam-sterilized product of the present invention include, but are not necessarily limited to, prepared meals such as a Hamburg steak, a meatball, fried chicken, processed fish paste (Kamaboko), a grilled fish, chopped burdock root cooked in soy sauce and sugar, and Chinese dumplings; processed meat products such as ham, sausage, and bacon; noodles such as Japanese thick wheat noodles, buckwheat noodles, pasta, and Chinese-style noodles; and ready-cooked and/or half-cooked solid food to be stored in a refrigerator or freezer.

### Method for Manufacturing Steam-Sterilized Product

It is preferable that a method for manufacturing a steam-sterilized product of the present invention includes: a step (S1) of arranging a content inside a container body (A) that includes an opening portion and an inner surface on which the content can be placed; a step (S2) of blocking the opening portion of the container body (A) with a layered structure (b-1) provided with at least two perforations by arranging the layered structure (b-1) on the opening portion; a step (S3) of sterilizing the content with steam that enters through the perforations of the layered structure (b-1) and flows on the inner surface of the container body (A); and a step (S4) of blocking the perforations of the layered structure (b-1) with a layered structure (b-2), in the stated order.

Also, it is preferable that another aspect of the method for manufacturing a steam-sterilized product of the present invention includes: a step (S1) of arranging a content inside a container body (A) that includes an opening portion and an inner surface on which the content can be placed; a step (S2'(a)) of blocking the opening portion of the container body (A) with a layered structure (B') by arranging the layered structure (B') on the opening portion; a step (S2'(b)) of producing a layered structure (b-1) by providing at least two perforations to the layered structure (B'); a step (S3) of sterilizing the content with steam that enters through the perforations of the layered structure (b-1) and flows on the inner surface of the container body (A); and a step (S4) of blocking the perforations of the layered structure (b-1) with a layered structure (b-2), in the stated order.

It is preferable that a step (S3(b)) of cooling the content by reducing pressure inside the container body (A) and discharging the steam inside the container body (A) is provided between the step (S3) and the step (S4). Also, it is preferable that a step (S3(c)) of filling the container body (A) with sterile gas is provided between the step (S3(b)) and the step (S4). Also, it is preferable a step (S3(d) of substituting the gas inside the packaging container with inert gas by supplying the inert gas to the container body (A) through at least one of the perforations and discharging the inert gas through the other perforations is provided between the step (S3(c)) and the step (S4). When the step (S3(b)), the step (S3(c)) and/or the step (S3(d)) are provided between the step (S3) and the step (S4), it is likely that a steam-sterilized product can be efficiently manufactured with which deterioration of the content can be suppressed and the quality of the content can be maintained for a long period of time.

Hereinafter, some examples of the method for manufacturing a steam-sterilized product of the present invention will be described with reference to drawings.

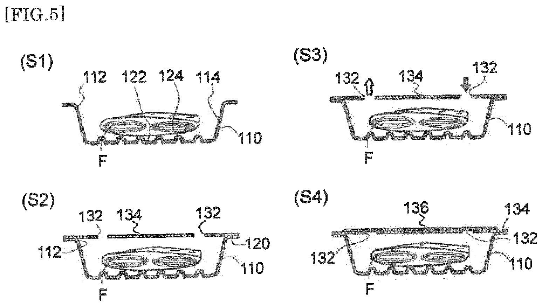

With a first manufacturing method of the present invention, a steam-sterilized product is manufactured as follows. The method will be described with reference to FIG. 5.

First, a content F is arranged on the inner surface 114 of the container body (A) 110 that includes the opening portion 112 (FIG. 5(S1)). In FIG. 5 (S1), the content F is supported by the apexes of a plurality of protruding portions 124 provided on the container bottom portion of the container body (A) 110. Thus, a plurality of cavities that correspond to the steam flowing portions 122 are formed between the protruding portions 124 and the content F. Here, it is preferable that the content F is arranged such that the upper end thereof is located below the opening portion of the container body (A) 110. The purpose of this is to enable subsequently introduced steam to further flow on the upper end of the content F and sterilize that portion.

Next, the layered structure (b-1) 134 that is provided with at least two perforations 132 in advance is arranged on the opening portion 112 of the container body (A) 110, and thus the opening portion 112 is blocked by the layered structure (b-1) 134 (FIG. 5(S2)). Specifically, the layered structure (b-1) 134 and the outer peripheral portion of the opening portion 112 (e.g., the flange portion 120 of the container body (A) 110) are tightly sealed using a means known to a person skilled in the art, such as heat sealing or an adhesive. In this state, the inside of the container body (A) 110 is in communication with the outside via the perforations 132 provided in the layered structure (b-1).

Thereafter, steam enters through the perforations 132 of the layered structure (b-1) 134 and flows on the inner surface 114 of the container body (A) 110, and thus the content F is sterilized. Here, the content F may be sterilized while the container body (A) 110 containing the content F is kept at normal pressure, or the content F may be sterilized after the container body (A) 110 containing the content F is once exposed to a reduced-pressure environment. When the sterilization is performed after the exposure to a reduced-pressure environment, it is likely to prevent oxidation deterioration of the content F and in turn deterioration of the quality thereof.

When the content F is sterilized while the container body (A) 110 containing the content F is kept at normal pressure, steam is introduced into the container body (A) 110 through a portion of at least two perforations 132 provided in the layered structure (b-1), and air is discharged through the other perforations as shown in FIG. 5(S3).

When the sterilization is performed after the container body (A) 110 containing the content F is once exposed to a reduced-pressure environment, the container body (A) 110 on which the layered structure (b-1) 134 is arranged is first placed in a reduced-pressure environment, and then air inside the container body (A) 110 is discharged (deaerated) to the outside through the perforations 132, for example (FIG. 6(a)). In this case, the container body 110 containing the content F and the layered structure (b-1) are once arranged in a container 202 capable of being hermetically sealed, for example. The container 202 capable of being hermetically sealed is provided with a pipe 206 that is provided with a valve 204 and that is connected to a pressure-reducing apparatus 208 such as a vacuum pump on the downstream side, and a pipe 207 that is provided with a valve 205 and into which steam is introduced using a certain means (not shown) when the valve 205 is opened. When the valve 205 is opened and the pressure-reducing apparatus 208 is operated in the state in which the valve 205 is closed, pressure inside the container 202 capable of being hermetically sealed is reduced via the pipe 206, and thus air inside the container body (A) 110 is discharged to the outside through the perforations 132 and the pipe 206. Thereafter, when the valve 205 is opened in the state in which the valve 204 is closed, for example, the reduced-pressure state of the container 202 capable of being hermetically sealed is cancelled, and steam is introduced into the container 202 capable of being hermetically sealed through the pipe 207. The steam introduced into the container 202 capable of being hermetically sealed is also introduced into the container body (A) 110 through all of the perforations 132 provided in the layered structure (b-1), and the content F can be in direct contact with the steam.

In this manner, in both cases shown in FIG. 5(S3) and FIG. 6(b), steam is introduced into the region between the layered structure (b-1) 134 and the container body (A) 110. When the content F is sterilized in this manner, the introduced steam uniformly spread in the region, and in particular, the steam also passes through the cavities of the steam flowing portions 122. Accordingly, more portions of the outer surface of the content F comes into direct contact with the steam, thus making it possible to sterilize the content F more uniformly and efficiently.

The temperature of steam introduced to sterilize the content F varies depending on the type and size of the content F, the capacity of the container body (A), and the like, and thus is not necessarily limited. For example, the temperature thereof is 100°C to 145°C, and preferably 115°C to 135°C. If the temperature of introduced steam is lower than 100°C, it is likely that the content F cannot be sufficiently sterilized, or the steam needs to be introduced for a long period of time. If the temperature of introduced steam is higher than 145°C, the content F can be sterilized, but the quality of the content F itself may be impaired.

Furthermore, the steam introduction time also varies depending on the type and size of the content F, the capacity of the container body (A), and the like, and thus is not necessarily limited. For example, the steam introduction time is 1 second to 5 minutes, and more preferably 1 second to 1 minute. If the steam introduction time is shorter than 1 second, a sufficient amount of energy is not applied to the content F from the steam, and a desired sterilization effect is less likely to be obtained. If the steam introduction time is longer than 1 minute, the content F can be sterilized, but the quality of the content F itself may be impaired. The content F is sterilized as described above.

After the steam introduction, it is preferable that the container body (A) 110 containing the sterilized content F is placed in a reduced-pressure environment, and the content F is cooled after the steam inside the container body (A) 110 is discharged to the outside through the perforations 132, for example (this step is also referred to as the step S3(b) hereinafter). When the step S3(b) is performed, it is likely that the temperature load applied to the content F and the amount of time when the content F and water vapor (water) are in contact with each other can be reduced, and thus deterioration of the quality of the content F can be prevented. After the step S3(b), it is preferable that the pressure inside the container body (A) is increased to normal pressure or positive pressure by filling the container body (A) with sterile gas (e.g., air, nitrogen, or carbon dioxide) (this step is also referred to as a "step S3(c) hereinafter).

When the container body (A) is not filled with inert gas (e.g., nitrogen gas or carbon dioxide) in the step S3(c), it is preferable to exchange the gas inside the container body (A) with the inert gas thereafter (this step is also referred to as the step S3(d) hereinafter). The gas exchange can be efficiently performed by introducing the sterile gas or inert gas into the container body (A) 110 through a portion of at least two perforations 132 provided in the layered structure (b-1) and discharging the gas through the other perforations, for example.

It should be noted that deaeration performed before steam introduction, sterilization by introduced steam, pressure reduction after the sterilization, and filling of sterile gas as described above can be collectively performed using a known apparatus such as a rapid preparation sterilizer RIC (manufactured by Hisaka Works Ltd.).

FIG. 5 is referred to again. With the first manufacturing method of the present invention, the perforations 132 of the layered structure (b-1) 134 are blocked by the layered structure (b-2) 136 immediately after the step S3(d), for example (FIG. 5(S4)). In FIG. 5(S4), the plurality of perforations 132 are blocked by a single layered structure (b-2), but the plurality of perforations 132 may be individually blocked by separate layered structures (b-2). Such blocking can be performed using a labeler or sealing machine known to a person skilled in the art, for example.

A steam-sterilized product can be manufactured using the first manufacturing method of the present invention as described above.

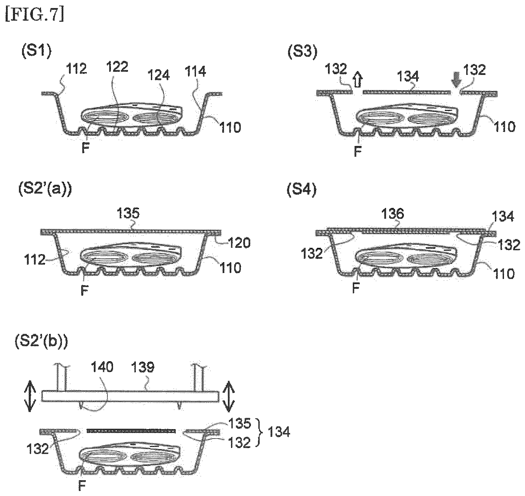

Alternatively, the steam-sterilized product of the present invention can also be manufactured using a second manufacturing method below. The method will be described with reference to FIG. 7.

First, the content F is arranged on the inner surface 114 of the container body (A) 110 that includes the opening portion 112 (FIG. 7(S1)). This step is the same as that shown in FIG. 5(S1).

Next, the layered structure (B') 135 is arranged on the opening portion 112 of the container body (A) 110, and thus the opening portion 112 is blocked by the layered structure (B') 135 (FIG. 7(S2'(a))). Specifically, the layered structure (B') 135 and the outer peripheral portion of the opening portion 112 (e.g., the flange portion 120 of the container body (A) 110) are tightly sealed using a means known to a person skilled in the art, such as heat sealing or an adhesive. In this state, the layered structure (B') secludes the inside of the container body (A) 110 from the outside.

Thereafter, the layered structure (B') 135 is provided with at least two perforations 132 (FIG. 7(S2'(b)). Specifically, ventilation between the inside of the container body (A) 110 and the outside is made possible by drilling the layered structure (B') 135 using a plurality of perforating jigs 140 provided to an arm 139. Drilling the layered structure (B') using the perforating jigs 140 may be providing perforations by merely piercing layered structure (B'), or providing perforations by melting the layered structure (B') using any heating means (not shown) that are provided to the perforating jigs 140 in advance. As described above, the layered structure (b-1) 134 can be produced in the state in which it is arranged on the container body (A) in advance.

It should be noted that, with the second manufacturing method of the present invention, the container body (A) 110 on which the layered structure (b-1) 134 is arranged may also be placed in a reduced-pressure environment, and then air inside the container body (A) 110 may also be discharged (deaerated) to the outside through the perforations 132, for example. Accordingly, it is likely to prevent oxidation deterioration of the content F and in turn deterioration of the quality thereof.

Thereafter, steam enters through the perforations 132 of the layered structure (b-1) 134 and flows on the inner surface 114 of the container body (A) 110, and thus the content F is sterilized (FIG. 7(S3) or FIG. 6(b)) in the same manner as the sterilization of the content F performed in the first manufacturing method (FIG. 5(S3) or FIG. 6(b)). With the second manufacturing method of the present invention, after the steam introduction, the container body (A) 110 containing the sterilized content F may also be placed in a reduced-pressure environment, and the steam inside the container body (A) 110 may also be discharged to the outside through the perforations 132, for example. Moreover, the container body (A) 110 may be filled with sterile gas (e.g., oxygen gas or air) or inert gas (e.g., nitrogen gas or carbon dioxide) through the perforations 132.

It should be noted that, with the second manufacturing method of the present invention, deaeration performed before steam introduction, sterilization by introduced steam, pressure reduction after the sterilization, and gas substitution as described above can also be collectively performed using a known apparatus such as a rapid preparation sterilizer RIC (manufactured by Hisaka Works Ltd.).

Finally, the perforations 132 of the layered structure (b-1) 134 are blocked by the layered structure (b-2) 136 (FIG. 7(S4)). This step is the same as that shown in FIG. 5(S4).

A steam-sterilized product can be manufactured using the second manufacturing method of the present invention as described above.

With the method for manufacturing a steam-sterilized product of the present invention, the content F is arranged in the container body (A) 110, a plurality of steam flowing channels 122 are formed under the content F. Accordingly, all of the sides of the content F such as the upper side, the lateral side, and the lower side can be in contact with steam introduced for sterilization. As a result, the content F can be sterilized more uniformly and efficiently. Furthermore, with the manufacturing method of the present invention, the thus sterilized content contained in the container body (A) and the lid member (B) (layered structures (b-1) and (b-2)) having excellent gas barrier properties can be distributed to the market as a product with a long shelf life (e.g., best-before date or expiration date).

### Examples

Hereinafter, the present invention will be described in detail by use of examples, but the present invention is not limited to these examples.

Materials used in examples and comparative examples below are as follows.
(1) EVOH
   - "EVAL (trademark) J171B": manufactured by Kuraray Co., Ltd.; ethylene unit content: 32 mol%
   - "EVAL (trademark) E105B": manufactured by Kuraray Co., Ltd.; ethylene unit content: 44 mol%
   - "EVAL (trademark) G156B": manufactured by Kuraray Co., Ltd.; ethylene unit content: 48 mol%
   - "EVAL (trademark) Film EF-XL": manufactured by Kuraray Co., Ltd.; biaxially stretched EVOH film; thickness: 12 µm
(2) Modified Starch
   - "Plantic (trademark) E": manufactured by Kuraray Co., Ltd. (a film having a layer configuration PE/Ad/barrier/Ad/PE)
(3) Nylon
   - "MX Nylon S6007": manufactured by Mitsubishi Gas Chemical Company, Inc.
(4) Composite Structure Containing Phosphorus and Polyvalent Metal Element
   - Product of Manufacturing Example 1 below
(5) Other Materials
   - "NOVATEC (trademark) PP EA7AD": manufactured by Japan Polypropylene Corporation; polypropylene (this may be abbreviated as "PP" hereinafter)
   - "ADMER (trademark) QF500": manufactured by Mitsui Chemicals, Inc.; adherent polyolefin (this may be abbreviated as "Ad" hereinafter)
   - "PYLEN (trademark) Film P5562": manufactured by Toyobo Co., Ltd.; biaxially stretched polypropylene film having anti-fogging properties; thickness: 20 µm (this may be abbreviated as "OPP1" hereinafter)
   - "OP U-1": manufactured by Mitsui Chemicals Tohcello. Inc.; biaxially stretched polypropylene film; thickness: 20 µm (this may be abbreviated as "OPP2" hereinafter)
   - "TAKELAC (trademark) A-385": manufactured by Takeda Pharmaceutical Company Limited; two-component adhesive
   - "TAKENATE (trademark) A-10": manufactured by Takeda Pharmaceutical Company Limited; two-component adhesive
   - "EMBLEM (trademark) ONBC-15": manufactured by Unitika Ltd.; stretched nylon film; thickness: 15 µm (this may be abbreviated as "ONY" hereinafter)

### Manufacturing Example 1: Manufacturing of Composite Structure Containing Phosphorus and Polyvalent Metal Element

### Preparation of Coating Liqud (S-1)

230 parts by mass of distilled water was heated to 70°C while being stirred. 88 parts by mass of aluminum isopropoxide was dripped into the distilled water over 1 hour, and then hydrolytic condensation was performed by gradually increasing the temperature of the liquid to 95°C to distill the resultant isopropanol. 4.0 parts by mass of a 60 mass% aqueous solution of nitric acid was added to the obtained liquid, and then the resultant liquid was stirred at 95°C for 3 hours to deflocculate the agglomerates of particles of the hydrolytic condensation product. Thereafter, the liquid was condensed such that the solid content concentration was 10 mass% in terms of aluminum oxide. 54.29 parts by mass of distilled water and 18.80 parts by mass of methanol were added to 22.50 parts by mass of the thus obtained dispersion liquid, and the resultant liquid was stirred to a uniformly dispersed state to form a dispersion liquid. Next, 4.41 parts by mass of 85 mass% aqueous solution of phosphoric acid was dripped into the dispersion liquid while the dispersion liquid was stirred and kept at 15°C. Stirring was continued at 15°C until the viscosity reached 1,500 mPa·s, and thus a desired coating liquid (S-1) was obtained. The molar ratio between aluminum atoms and phosphorus atoms (aluminum atom : phosphorus atom) in the coating liquid (S-1) was 1.15:1.00.

### Synthesis of Organic Phosphorus Compound (BO-1)

Under a nitrogen atmosphere, 10 g of vinylphosphonic acid and 0.025 g of 2,2'-azobis(2-amidinopropane) dihydrochloride were dissolved in 5 g of water, and the resultant solution was stirred at 80°C for 3 hours. After being cooled, the polymerization solution was diluted by adding 15 g of water thereto, and was filtered using a cellulose membrane (Spectra/Por (registered trademark) manufactured by Spectrum Laboratories Inc.). After water in the filtrate was distilled off, the residue was dried in a vacuum at 50°C for 24 hours, and thus an organic phosphorus compound (BO-1; poly(vinylsulfonic acid)) was obtained. According to the result of GPC analysis, the number average molecular weight of the organic phosphorus compound (BO-1) was 10,000 in terms of polyethylene glycol.

### Manufacturing of Coating Liquid (T-1)

A mixture containing 67 mass% of the organic phosphorus compound (BO-1) obtained as described above and 33 mass% of polyethylene oxide having a weight average molecular weight of 60,000 ("ALKOX (registered trademark) L-6" manufactured by Meisei Chemical Works, Ltd.) was prepared. This mixture was dissolved in a mixed solvent of water and methanol (water : methanol = 7 : 3 (mass ratio)), and thus a coating liquid (T-1) containing a solid content at a concentration of 1 mass% was obtained.

### Production of Multilayer Structure (B1) (Composite Structure Containing Phosphorus and Polyvalent Metal Element)

The coating liquid (S-1) prepared as described above was applied onto a stretched polyethylene terephthalate film (Lumirror (registered trademark) P60 manufactured by Toray Industries Inc.; thickness: 12 µm) serving as a substrate using a bar coater such that the thickness was 0.3 µm after drying. After the application, the film was dried at 110°C for 5 minutes and then heated at 160°C for 1 minute, and thus a precursor layer of a layer was formed on the substrate. Next, the coating liquid (T-1) was applied using a bar coater such that the ratio between the mass WBI of the inorganic phosphorus compound (BI) and the mass WBO of the organic phosphorus compound (BO) (WBO / WBI) was 1.10/98.90, and was then dried at 110°C for 3 minutes. Thereafter, a layer (Y1-1) was formed through heating at 220°C for 1 minute. In this manner, a composite structure (multilayer structure (Bl)) containing phosphorus and a polyvalent metal element was obtained.

Evaluation methods employed for examples and comparative examples below are as follows.

### (1) Measurement of Oxygen Permeability

The oxygen permeability of each of the obtained multilayer containers and multilayer films was measured under the conditions of 20°C and 65%RH in accordance with JIS-K7126-2 (2006) Part 2 (isopiestic method) using an oxygen permeability measurement apparatus OX-TRAN Type 2/20 manufactured by Mocon Inc. (detection limit value: 0.0005 cc/pck·day·atm and 0.1 cc/m²·day·atm). The oxygen permeability of the packaging container was calculated by summing up the oxygen permeability (cc/pck·day·atm) of the container body (A) and a value obtained by multiplying the oxygen permeability (cc/m²·day-atm) of the lid member (B) by the area of the lid member, and then was divided by the volume of the inside of the packaging container. The oxygen permeability (cc/cm³·day·atm) per packaging container unit was thus calculated. Table 4 shows the results.

### (2) Measurement of Composition of Gas inside Container

The oxygen concentration in the packaging container was measured using CheckPoint 3 manufactured by Mocon Europe.

### (3) Number of General Bacteria (Number of Aerobic Bacteria)

After stored at 10°C and 50%RH for 15 days, the obtained samples were measured using a standard agar medium method (35°C±1°C, 48±3 hours) in accordance with Standard Methods of Analysis in Food Safety Regulation, Microorganisms (2015).

### (4) Water Contact Angle

The water contact angles on the surfaces of the obtained layered structures (b-1) on the container inner face side were measured using a contact angle measurement tester DropMaster 500 manufactured by Kyowa Interface Science Co., Ltd. in accordance with JIS R3257.

### (5) Appearance properties

After stored at 10°C and 50%RH for 15 days, the obtained samples were kept at 23°C for 1 minute and then their appearances were visually confirmed. The samples were evaluated based on the following criterion.
A: The inner side of the lid member did not fog.
B: The inner side of the lid member fogged.

### (6) Color of Food

After stored at 10°C and 50%RH for 15 days, the obtained samples were opened, and the coloration state of the food thereinside (grilled salmon) was visually confirmed by five panelists. After consultation, the samples were evaluated based on the following criterion.
A: Nearly unchanged after the storage.
B: Slightly discolored.
C: Considerably discolored.

### (7) Smell of Food

After stored at 10°C and 50%RH for 15 days, the obtained samples were opened, and the smell of the food thereinside (grilled salmon) was confirmed by five panelists. After consultation, the samples were evaluated based on the following criterion.
A: Nearly unchanged after the storage.
B: Slightly less smell.
C: Substantially no smell.

### (8) Taste of Food

After stored at 10°C and 50%RH for 15 days, the obtained samples were opened, and the taste of the food thereinside (grilled salmon) was confirmed by five panelists. After consultation, the samples were evaluated based on the following criterion.
A: Nearly unchanged after the storage.
B: Slightly less taste.
C: Substantially no taste.

### Example 1

### Production of Multilayer Structure (A')

A multilayer structure that included three types of layers and was constituted by five layers (PP/Ad/EVOH/Ad/PP=270 µm/15 µm/30 µm/15 µm/270 µm) was produced using methods and conditions listed in Table 1 below, where EVOH "EVAL (trademark) J171B" was used for the oxygen barrier layer, polypropylene "NOVATEC (trademark) PP EA7AD" was used for the thermoplastic resin layer, and adherent polyolefin "ADMER (trademark) QF500" was used for the adherent layer. It should be noted that, when a film was formed, a temperature-controllable haul-off roll was arranged on the downstream side of an extrusion machine equipped with a film-formation die, and a film was wound using a winder to obtain the desired multilayer structure (A').

**[Table 1]**

| Methods and conditions adopted for producing a multilayer structure (A') | |
|---|---|
| Extruder for EVOH | 20mmϕExtruder, Lab machine Type ME, CO-EXT (Toyo Seiki Seisaku-sho, Ltd.) |
| Extruder for Ad | 20mmϕExtruder P25-18AC (Osaka Seiki Kousaku) |
| Extruder for PP | 32mmϕExtruder GF-32-A (Research Laboratory of Plastics Technology Co., Ltd.) |
| Temperature for extruding EVOH | Supply part / Compression part / Weighing part / Die = 175/210/220/220 °C |
| Temperature for extruding Ad | Supply part / Compression part / Weighing part / Die = 100/160/220/220 °C |
| Temperature for extruding PP | Supply part / Compression part / Weighing part / Die = 150/200/210/220 °C |
| Die | Coat hanger die having a width of 300mm (Research Laboratory of Plastics Technology Co., Ltd.) |
| Temperature of a haul-off roll | 80 °C |

### Production of Container Body (A)

A container body (A) with the appearance shown in FIG. 3(b) was obtained by molding the multilayer structure (A') obtained as described above into a container shape (having a length of 12 cm, a width of 9 cm, and a height of 3 cm) at a sheet temperature of 150°C through heat molding (compressed air: 5 kg/cm², plug temperature: 150°C, and die temperature: 70°C) using a heat molding machine (manufactured by Asano Lab.). It should be noted that the protruding portions provided on the container bottom portion of the container body (A) had a height (a distance from the outer bottom portion to the apex of the protruding portion) of 5.0 mm. Table 2 shows the features of the multilayer structure (A') and the container body (A) employed in this embodiment.

### Production of Layered Structure (b-1)

After a two-component adhesive ("TAKELAC (trademark) A-385" / "TAKENATE A-10") was applied to one surface of a biaxially stretched polypropylene film having anti-fogging properties "PYLEN (trademark) Film P5562" at a solid content weight of 2.5 g/m², a biaxially stretched EVOH film "EVAL (trademark) EF-XL" serving as the oxygen barrier layer was stacked thereon using a dry lamination method. Next, a stretched nylon film "EMBLEM (trademark) ONBC-15" was stacked thereon using the same method, and thus a layered structure (b-1) having a configuration OPP1/EF-XL/ONY and a thickness of 47 µm was obtained. Table 3 shows the features of the layered structure (b-1) employed in this embodiment.

### Production of Steam-Sterilized Sample

A pack sealer manufactured by Eshin Pack Ind. Co., Ltd. was used to place grilled salmon with a weight of 70 g as the food on the inner bottom portion of the container body (A) obtained as described above. Thereafter, the layered structure (b-1) obtained as described above was placed on the opening portion of the container body (A) such that the OPP1 was in contact with the container body (A), and then the layered structure (b-1) and the container body (A) were hermetically sealed through heat sealing.

Next, the layered structure (b-1) on the container body (A) was provided with six perforations having a diameter of 4 mm at predetermined intervals. Thereafter, the container provided with the perforations was placed in a treatment tank of "Rapid Preparation Sterilizer RIC" (also referred to merely as "RIC" hereinafter) manufactured by Hisaka Works Ltd., and the RIC was operated to reduce the pressure inside the treatment tank and thereby deaerate the container body (A) through the perforations. Next, steam at 125°C was introduced into the container body (A) through the perforations, and thus the food was sterilized for 10 seconds. It should be noted that the surface temperature of the food measured during the steam sterilization using a temperature sensor installed under the food was 125°C. Subsequently, the pressure inside the treatment tank of the RIC was reduced to discharge the steam inside the container body (A) through the perforations, and then the food was cooled while the inside of the treatment tank was kept at low pressure. Thereafter, the pressure inside the treatment tank was increased to normal pressure, the lid of the treatment tank was opened, the container body (A) containing the sterilized food was taken out with the layered structure (b-1) being attached thereto, and then nitrogen was injected into the container body (A) through the perforations for 15 seconds at a pressure of 1.0 kg/cm² to fill the container body (A).

Finally, aluminum tape "No. 8063" (including a 50-µm aluminum layer and a 50µm adherent layer (this may be abbreviated as "aluminum" hereinafter)) was used as the layered structure (b-2) to block all of the perforations of the layered structure (b-1), and thus a steam-sterilized sample was obtained.

Regarding the thus obtained steam-sterilized sample, the measurement of the composition of gas inside the sample container, the number of general bacteria (the number of aerobic bacteria), the water contact angle, the appearance properties, the color of the food, the smell of the food, and the taste of the food were evaluated in accordance with the above-described evaluation methods. Table 4 shows the results.

### Examples 2 to 16, 18, and 19

Steam-sterilized samples were obtained in the same manner as in Example 1, except that, in the multilayer structure (A'), the container body (A), the layered structure (b-1), and the layered structure (b-2) produced in Example 1, one or more of the content, the type and thickness of layer configuration, the type of oxygen barrier layer, the appearance of the container body (A), the height of the protruding portions of the container body (A), the diameter of the perforations, and the number of the perforations were changed as listed in Tables 2 and 3.

Regarding these samples, the measurement of the composition of gas inside the sample container, the number of general bacteria (the number of aerobic bacteria), the water contact angle, the appearance properties, the color of the food, the smell of the food, and the taste of the food were evaluated in accordance with the above-described evaluation methods. Table 4 shows the results.

### Example 17

A steam-sterilized sample was obtained in the same manner as in Example 1, except that a layered structure (b-1) and a layered structure (b-2) listed in Table 3 were used, and, when the perforations of the layered structure (b-1) were blocked by the layered structure (b-2), the layered structure (b-2) was placed on the layered structure (b-1) such that the layered structure (b-1) was entirely covered by the layered structure (b-2) and OPP2 was in contact with the layered structure (b-1), and then the layered structure (b-1) and the layered structure (b-2) were sealed through heat sealing. It should be noted that the layered structure (b-2) was the same as the layered structure (b-1) of Example 1.

Regarding this sample, the measurement of the composition of gas inside the sample container, the number of general bacteria (the number of aerobic bacteria), the water contact angle, the appearance properties, the color of the food, the smell of the food, and the taste of the food were evaluated in accordance with the above-described evaluation methods. Table 4 shows the results.

### Comparative Example 1

A steam-sterilized sample was obtained in the same manner as in Example 1, except that a container body including a flat container bottom portion provided with no protruding portions (the other dimensions were the same as those of the container body (A) used in Example 1) was used instead of the container body (A) produced in Example 1. Regarding this sample, the measurement of the composition of gas inside the sample container, the number of general bacteria (the number of aerobic bacteria), the water contact angle, the appearance properties, the color of the food, the smell of the food, and the taste of the food were evaluated in accordance with the above-described evaluation methods. Table 4 shows the results.

### Comparative Example 2

A steam-sterilized sample was obtained in the same manner as in Example 1, except that a layered structure (b-1) in which the number of perforations was reduced to one was used instead of the layered structure (b-1) produced in the Example 1. Regarding this sample, the measurement of the composition of gas inside the sample container, the number of general bacteria (the number of aerobic bacteria), the water contact angle, the appearance properties, the color of the food, the smell of the food, and the taste of the food were evaluated in accordance with the above-described evaluation methods. Table 4 shows the results.

### Comparative Example 3

A steam-sterilized sample was obtained in the same manner as in Example 1, except that a multilayer structure (A'), a container body (A), and a layered structure (b-1) that were constituted by only PP were used instead of the multilayer structure (A'), the container body (A), and the layered structure (b-1) produced in the Example 1. Regarding this sample, the measurement of the composition of gas inside the sample container, the number of general bacteria (the number of aerobic bacteria), the water contact angle, the appearance properties, the color of the food, the smell of the food, and the taste of the food were evaluated in accordance with the above-described evaluation methods. Table 4 shows the results.

**[Table 2]**

| | Contents | Multilayer Structure (A') | | | | | | | | Appearance of Container Body (A) | Height of Protruding Portions |
|---|---|---|---|---|---|---|---|---|---|---|---|
| | | Layer Composition | Oxygen Barrier Layer | PP | Ad | EVOH | Ad | PP | Total | | |
| | | | | Thickness (µm) | | | | | | | mm |
| Example 1 | Grilled Salmon | PP/Ad/Barrier/Ad/PP | EVALJ171B | 270 | 15 | 30 | 15 | 270 | 600 | FIG.1 (b) | 5.0 |
| Example 2 | Grilled Salmon | PP/Ad/Barrier/Ad/PP | EVALJ171B | 270 | 15 | 30 | 15 | 270 | 600 | FIG.1 (b) | 5.0 |
| Example 3 | Grilled Salmon | PE(Ad/Barrier/Ad/PE | PLANTIC E | | | | | | 550 | FIG.1 (b) | 5.0 |
| Example 4 | Grilled Salmon | PP/Ad/Barrier/Ad/PP | MXD6 | 270 | 15 | 30 | 15 | 270 | 600 | FIG.1 (b) | 5.0 |
| Example 5 | Grilled Salmon | PP/Ad/Barrier/Ad/PP | EVAL J171B | 270 | 15 | 30 | 15 | 270 | 600 | FIG.1 (b) | 5.0 |
| Example 6 | Grilled Salmon | PP/Ad/Barrier/Ad/PP | EVALJ171B | 270 | 15 | 30 | 15 | 270 | 600 | FIG.1 (b) | 5.0 |
| Example 7 | Grilled Salmon | PP/Ad/Barrier/Ad/PP | EVAL J171B | 270 | 15 | 30 | 15 | 270 | 600 | FIG.1 (b) | 5.0 |
| Example 8 | Grilled Salmon. | PP/Ad/Barrier/Ad/PP | EVALJ171B | 270 | 15 | 30 | 15 | 270 | 600 | FIG.1 (b) | 4.0 |
| Example 9 | Grilled Salmon | PP/Ad/Barrier/Ad/PP | EVAL J171B | 270 | 15 | 30 | 15 | 270 | 600 | FIG.1 (b) | 2.5 |
| Example 10 | Grilled Salmon | PP/Ad/Barrier/Ad/PP | EVALJ171B | 270 | 15 | 30 | 15 | 270 | 600 | FIG.1 (b) | 5.0 |
| Example 11 | Grilled Salmon | PP/Ad/Barrier/Ad/PP | EVAL J171B | 282 | 15 | 6 | 15 | 282 | 600 | FIG.1 (b) | 5.0 |
| Example 12 | Grilled Salmon | PP/Ad/Barrier/Ad/PP | EVAL E105B | 273 | 15 | 25 | 15 | 273 | 600 | FIG.1 (b) | 5.0 |
| Example 13 | Grilled Salmon | PP/Ad/Barrier/Ad/PP | EVAL E105B | 284 | 15 | 3 | 15 | 284 | 600 | FIG.1 (b) | 5.0 |
| Example 14 | Grilled Salmon | PP/Ad/Barrier/Ad/PP | EVAL E105B | 284 | 15 | 3 | 15 | 284 | 600 | FIG.1 (b) | 5.0 |
| Example 15 | Grilled Salmon | PP/Ad/Barrier/Ad/PP | EVAL J171 B | 270 | 15 | 30 | 15 | 270 | 600 | FIG.1 (c) | 5.0 |
| Example 16 | Grilled Salmon | PP/Ad/Barrier/Ad/PP | EVALJ171B | 270 | 15 | 30 | 15 | 270 | 600 | FIG.1 (a) | 5.0 |
| Example 17 | Grilled Salmon | PP | - | 300 | - | - | - | 300 | 600 | FIG.1 (b) | 5.0 |
| Example 18 | Fried Chicken | PP/Ad/Barrier/Ad/PP | EVALJ171B | 270 | 15 | 30 | 15 | 270 | 600 | FIG.1 (b) | 5.0 |
| Example 19 | *Kinpira* -Style Sauteed Burdock | PP/Ad/Barrier/Ad/PP | EVALJ171B | 270 | 15 | 30 | 15 | 270 | 600 | FIG.1 (b) | 5.0 |
| Comparative Example 1 | Grilled Salmon | PP/Ad/Barrier/Ad/PP | EVALJ171B | 270 | 15 | 30 | 15 | 270 | 600 | - ¹⁾ | 0 |
| Comparative Example 2 | Grilled Salmon | PP/Ad/Barrier/Ad/PP | EVALJ171B | 270 | 15 | 30 | 15 | 270 | 600 | FIG.1 (b) | 5.0 |
| Comparative Example 3 | Grilled Salmon | PP | - | 300 | - | - | - | 300 | 600 | FIG.1 (b) | 5.0 |

| | | | | | | | | | | | |
|---|---|---|---|---|---|---|---|---|---|---|---|
| 1) A container body having the same size as the container body (A) shown in FIG. 1 (b) was used except that the bottom of the container had no protrusions and was flat. | | | | | | | | | | | |

**[Table 3]**

| | Layered Structure (b-1) | | | | Layered Structure (b-2) |
|---|---|---|---|---|---|
| | Layer Composition¹⁾ | Oxygen Barrier Layer | Diameter of Perforations | Number of Perforations | Layer Composition |
| | | | mm | Quantity | |
| Example 1 | ONy/Barrier/OPP1 | EF-XL | 4 | 6 | aluminum |
| Example 2 | Barrler/ONy/OPP1 | Composite Structure²⁾ | 4 | 6 | aluminum |
| Example 3 | ONy/Barrier/OPP1 | EF-XL | 4 | 6 | aluminum |
| Example 4 | ONy/Barrier/OPP1 | EF-XL | 4 | 6 | aluminum |
| Example 5 | ONy/Barrier/OPP1 | EF-XL | 2 | 6 | aluminum |
| Example 6 | ONy/Barrier/OPP1 | EF-XL | 1 | 6 | aluminum |
| Example 7 | ONy/Barrier/OPP1 | EF-XL | 4 | 2 | aluminum |
| Example 8 | ONy/Barrier/OPP1 | EF-XL | 4 | 6 | aluminum |
| Example 9 | ONy/Barrier/OPP1 | EF-XL | 4 | 6 | aluminum |
| Example 10 | ONy/Barrier/OPP1 | EF-XL | 4 | 6 | aluminum |
| Example 11 | ONy/Barrier/OPP1 | EF-XL | 4 | 6 | aluminum |
| Example 12 | ONy/Barrier/OPP1 | EF-XL | 4 | 6 | aluminum |
| Example 13 | ONy/Barrier/OPP1 | EF-XL | 4 | 6 | aluminum |
| Example 14 | ONy/Barrier/OPP2 | EF-XL | 4 | 6 | aluminum |
| Example 15 | ONy/Barrier/OPP1 | EF-XL | 4 | 6 | aluminum |
| Example 16 | ONy/Barrier/OPP1 | EF-XL | 4 | 6 | aluminum |
| Example 17 | OPP1 | - | 4 | 6 | ONy/Barrier³⁾/OPP2 |
| Example 18 | ONy/Barrier/OPP1 | EF-XL | 4 | 6 | aluminum |
| Example 19 | ONy/Barrier/OPP1 | EF-XL | 4 | 6 | aluminum |
| Comparative Example 1 | ONy/Barrier/OPP1 | EF-XL | 4 | 6 | aluminum |
| Comparative Example 2 | ONy/Barrier/OPP1 | EF-XL | 4 | 1 | aluminum |
| Comparative Example 3 | PP | - | 4 | 6 | PP |

| | | | | | |
|---|---|---|---|---|---|
| 1)"Barrier" represents "oxygen barrier layer" in the right column. 2) Composite structure containing phosphorus and a polyvalent metal element prepared in Manufacturing Example 1 3) "Barrier" represents "oxygen barrier layer" ("Evar (trademark) film EF-XL": manufactured by Kuraray Co., Ltd.). | | | | | |

**[Table 4]**

| | Oxygen Permeability of Contaler Body (A) | Oxygen Permeability of Lid member (B) | Oxygen Permeability of Packaging Container | Maximum Temperature of Food during Steam Sterilization | Oxygen Concentration in Container | Aerobic Bacteria (CFU/g) | Water Contact Angle | Appearanc e Properties | Food Quality Evaluation | | |
|---|---|---|---|---|---|---|---|---|---|---|---|
| | | | | | | | | | Color | Smell | Taste |
| | cc/pck·day·atm | cc/m²·day·atm | cc/cm³·day·atm | °C | % | Number of Bacteria after 15 Days | Degree | | | | |
| Example 1 | 0.0062 | 0.4 | 0.00003 | 125 | 2.0 | < 10 | 55 | A | A | A | A |
| Example 2 | 0.0062 | 0.2 | 0.00003 | 125 | 2.0 | <10 | 56 | A | A | A | A |
| Example 3 | 0.0047 | 0.4 | 0.00003 | 125 | 2.0 | <10 | 54 | A | A | A | A |
| Example 4 | 0.066 | 0,4 | 0.00022 | 125 | 2.0 | < 10 | 53 | A | A | A | A |
| Example 5 | 0.0062 | 0.4 | 0.00003 | 125 | 2.0 | 1.8×10³ | 55 | A | A | A | B |
| Example 6 | 0.0062 | 0.4 | 0.00003 | 125 | 2.0 | 6.2× 10⁴ | 57 | A | A | A | B |
| Example 7 | 0.0062 | 0.4 | 0.00003 | 125 | 2.0 | < 10 | 54 | A | A | A | A |
| Example 8 | 0.0062 | 0.4 | 0.00003 | 103 | 2.0 | 2.6×10² | 52 | A | A | A | A |
| Example 9 | 0.0062 | 0.4 | 0.00003 | 92 | 2.0 | 5.1×10³ | 51 | A | A | A | A |
| Example 10 | 0.0062 | 0.4 | 0.00003 | 125 | 4.3 | <10 | 58 | A | B | B | B |
| Example 11 | 0.031 | 0.4 | 0.00011 | 125 | 2.0 | 1.3×10 | 56 | A | B | B | A |
| Example 12 | 0.028 | 0.4 | 0.00010 | 125 | 2.0 | 3.8×10 | 53 | A | B | A | A |
| Example 13 | 0.23 | 0.4 | 0.00074 | 125 | 2.0 | 3.3×10³ | 55 | A | B | B | B |
| Example 14 | 0.23 | 0.4 | 0.00074 | 125 | 2.0 | 4.9×10³ | 82 | B | B | B | B |
| Example 15 | 0.0062 | 0.4 | 0.00003 | 125 | 2.0 | <10 | 55 | A | A | A | A |
| Example 16 | 0.0062 | 0.4 | 0.00003 | 125 | 2.0 | <10 | 57 | A | A | A | A |
| Example 17 | 0.0062 | 0.4 | 0.00002 | 125 | 2.0 | <10 | 55 | A | A | A | A |
| Example 18 | 0.0062 | 0.4 | 0.00003 | 125 | 2.0 | <10 | 58 | A | A | A | A |
| Example 19 | 0.0062 | 0.4 | 0.00003 | 125 | 2.0 | <10 | 55 | A | A | A | A |
| Comparative Example 1 | 0.0062 | 0.4 | 0.00003 | 92 | 2.0 | 4.3×10³ | 82 | B | A | A | C |
| Comparative Example 2 | 0.0062 | 0.4 | 0.00003 | 125 | 11.0 | < 10 | 89 | B | C | C | C |
| Comparative Example 3 | 2.7 | 0.4 | 0.0082 | 125 | 2.0 | < 10 | 84 | B | C | c | C |

As shown in Tables 2 to 4, all of the packaging containers used in the steam-sterilized samples produced in Examples 1 to 19 had excellent oxygen permeability, and suitable gas barrier properties could be provided to the packaging containers. Moreover, the numbers of aerobic bacteria proliferating in the steam-sterilized samples produced in the Examples 1 to 19 that had been stored for 15 days was significantly smaller compared with the sample of Comparative Example 1 in which the container body (A) provided with no protruding portions (i.e., steam flowing portions), and the food, which was a content, could be maintained in a sterilized state for a longer period of time.

Furthermore, it was found that the food contained in the steam-sterilized samples produced in Examples 1 to 19 could retain favorable or excellent qualities regarding all of the color, the smell, and the taste, compared with those described in Comparative Examples 1 to 3, for example. Moreover, it was found that, in the cases of Examples 1 to 13, 15, 16, 18, and 19 in which an anti-fog film was used, the inside of the lid member did not fog even after 15-day storage at a low temperature (10°C), and favorable appearance could be maintained.

### Industrial Applicability

With the present invention, a content can be more uniformly sterilized, and the content can be maintained in a sterilized state for a long period of time. The packaging container of the present invention is useful in fields in which sterilization of a content and an improvement in shelf life are desired, such as fields of food, cosmetics, and medicines.

### List of Reference Numerals

- 100: Packaging container
- 110, 110', 110": Container body (A)
- 112: Opening portion
- 114: Inner surface
- 116: Container side wall portion (a2)
- 118: Container bottom portion (a1)
- 120: Flange portion
- 121: Bulging portion
- 122, 122', 122": Steam flowing portion
- 123: Pointed end portion
- 124, 124', 124": Protruding portion
- 126: Block
- 130: Lid member (B)
- 132: Perforation
- 134: Layered structure (b-1)
- 135: Layered structure (B')
- 136: Layered structure (b-2)
- 139: Arm
- 140: Perforating jig

## Claims

1. A packaging container comprising:
a container body (A) that includes an opening portion and an inner surface on which a content can be placed; and
a lid member (B) for covering the opening portion of the container body (A),
wherein the container body (A) includes, on the inner surface, a steam flowing channel that enables steam to flow between the content and the inner surface, and is constituted by a multilayer structure (A') that includes at least one oxygen barrier layer (a),
the lid member (B) includes a layered structure (b-1) provided with at least two perforations, and a layered structure (b-2) that is arranged on an outer surface of the layered structure (b-1) and blocks the perforations, and
at least one of the layered structure (b-1) and the layered structure (b-2) includes an oxygen barrier layer (b).

2. The packaging container according to claim 1, wherein the oxygen barrier layer (b) in the lid member (B) contains at least one selected from the group consisting of an ethylene-vinyl alcohol copolymer, a composite structure containing phosphorus and a polyvalent metal element, modified starch, polyamide, polyester, polyvinylidene chloride, an acrylonitrile copolymer, polyvinylidene fluoride, polychlorotrifluoroethylene, polyvinyl alcohol, an inorganic layered compound, an inorganic deposited layer, and a metal foil.

3. The packaging container according to claim 1 or 2, wherein a water contact angle on a surface that constitutes an inner side of the lid member (B) is 70° or less when measured in accordance with JIS R3257.

4. The packaging container according to any one of claims 1 to 3, wherein the perforations of the layered structure (b-1) of the lid member (B) have a diameter of 1 mm or more and 20 mm or less.

5. The packaging container according to any one of claims 1 to 4, wherein the lid member (B) includes a sticky layer between the layered structure (b-1) and the layered structure (b-2).

6. The packaging container according to any one of claims 1 to 5, wherein the oxygen barrier layer (a) in the container body (A) contains at least one selected from the group consisting of an ethylene-vinyl alcohol copolymer, a composite structure containing phosphorus and a polyvalent metal element, modified starch, polyamide, polyester, polyvinylidene chloride, an acrylonitrile copolymer, polyvinylidene fluoride, polychlorotrifluoroethylene, polyvinyl alcohol, an inorganic layered compound, an inorganic deposited layer, and a metal foil.

7. A container body (A) to be used in the packaging container according to any one of claims 1 to 6, comprising
an opening portion; and an inner surface on which a content can be placed,
wherein the container body (A) includes, on the inner surface, a steam flowing channel that enables steam to flow between the content and the inner surface, and is constituted by a multilayer structure (A') that includes at least one oxygen barrier layer (a),
the inner surface includes a container bottom portion (a1), and a container side wall portion (a2) that extends upward from a periphery of the container bottom portion (a1), and
the steam flowing channel and the opening portion are in communication with each other.

8. A multilayer structure (A') to be used in the packaging container according to any one of claims 1 to 6, wherein an oxygen barrier layer (a) contains at least one selected from the group consisting of an ethylene-vinyl alcohol copolymer, polyamide, and modified starch.

9. A layered structure (B') to be used in the layered structure (b-1) included in the packaging container according to any one of claims 1 to 6, the layered structure (B') comprising
at least one oxygen barrier layer (b),
wherein the layered structure (B') includes a sealant layer having a melting point of 180°C or lower on at least one outermost layer thereof.

10. The layered structure (B') according to claim 9, having oxygen barrier properties of 10 cc/(m²·day·atm) or less at 20°C and 65%RH.

11. The layered structure (B') according to claim 9 or 10, having a puncture strength of 10 N to 40 N.

12. The layered structure (B') according to any one of claims 9 to 11, wherein the oxygen barrier layer (b) contains at least one selected from the group consisting of an ethylene-vinyl alcohol copolymer, a composite structure containing phosphorus and a polyvalent metal element, modified starch, polyamide, polyester, polyvinylidene chloride, an acrylonitrile copolymer, polyvinylidene fluoride, polychlorotrifluoroethylene, polyvinyl alcohol, an inorganic layered compound, an inorganic deposited layer, and a metal foil.

13. A layered structure (b-1) obtained by providing at least two perforations in the layered structure (B') according to any one of claims 9 to 12.

14. The layered structure (b-1) according to claim 13, wherein the oxygen barrier layer (b) contains at least one selected from the group consisting of an ethylene-vinyl alcohol copolymer, a composite structure containing phosphorus and a polyvalent metal element, modified starch, polyamide, polyester, polyvinylidene chloride, an acrylonitrile copolymer, polyvinylidene fluoride, polychlorotrifluoroethylene, polyvinyl alcohol, an inorganic layered compound, an inorganic deposited layer, and a metal foil.

15. A steam-sterilized product comprising:
the packaging container according to any one of claims 1 to 6; and
a steam-sterilized content,
wherein the content is placed on the inner surface of the container body (A) included in the packaging container, and
the container body (A) and the lid member (B) included in the packaging container are hermetically sealed.

16. The steam-sterilized product according to claim 15, wherein an oxygen concentration in a region surrounded by the container body (A) and the lid member (B) is 5 vol% or less.

17. The steam-sterilized product according to claim 15 or 16, wherein a carbon dioxide concentration in a region surrounded by the container body (A) and the lid member (B) is 0.5 vol% or more and 40 vol% or less.

18. The steam-sterilized product according to any one of claims 15 to 17, wherein the steam-sterilized content is food.

19. The packaging container according to any one of claims 1 to 6, wherein the content is food, and the packaging container is used to sterilize the content with steam.
